# FASCICULE DE BREVET EUROPEEN

(11) **EP 4 125 400 B1**
(45) Date de publication et mention de la délivrance du brevet: **29.07.2026**
(21) Numéro de dépôt: 21713694.4
(22) Date de dépôt: 25.03.2021
(51) Int. Cl.: A23C 9/144, A23C 21/00, A23C 9/152

(54) **PROCEDE DE DEMINERALISATION D'UNE COMPOSITION PROTEIQUE LAITIERE ET INSTALLATION POUR LA MISE EN OEUVRE DUDIT PROCEDE**
DEMINERALISIERUNGSVERFAHREN EINER MILCH-EIWEISS-ZUSAMMENSETZUNG, SOWIE ANLAGE ZUR DEREN HERSTELLUNG
METHOD FOR DEMINERALISATION OF A DAIRY PROTEIN COMPOSITION AND APPARATUS FOR CARRYING OUT SAID PROCESS

(30) Priorité: 25.03.2020 FR 2002936
(43) Date de publication de la demande: 08.02.2023
(73) Titulaire: Eurodia Industrie, 84120 Pertuis (FR)
(72) Inventeur: GONIN, Anne, 84120 PERTUIS (FR); LUTIN, Florence, 84120 PERTUIS (FR)
(74) Mandataire: Cabinet Beau de Loménie
(86) Numéro de dépôt international: PCT/EP2021/057801
(87) Numéro de publication internationale: WO 2021/191377

(56) Documents cités:
- EP-A1- 1 053 685
- EP-A1- 3 597 045
- WO-A1-2016/207579
- WO-A1-2019/180389
- US-A- 4 971 701
- US-A- 5 851 372
- US-A- 6 033 700
- US-A1- 2009 142 459

## Description

### Domaine Technique

La présente invention concerne un procédé de déminéralisation d'une composition protéique laitière. Aussi décrite, mais ne faisant pas partie de l'invention est la composition protéique laitière susceptible d'être obtenue par ce procédé, en particulier un lactosérum déminéralisé.

La présente invention concerne également une installation pour la mise en œuvre du procédé de déminéralisation d'une composition protéique laitière.

### Technique antérieure

Une composition protéique laitière peut être du lactosérum. Le lactosérum, également appelé sérum ou petit-lait, est la partie liquide issue de la coagulation du lait. On distingue notamment deux sortes de lactosérums : ceux issus des fabrications en milieu acide de caséines ou de fromages à pâte fraîche (lactosérums acides) ; et ceux issus des fabrications de caséines mettant en œuvre une présure et des fromages à pâte pressée cuite ou demi-cuite (lactosérums doux).

Le lactosérum est principalement formé d'eau, de lactose, de protéines, notamment de protéines sériques, et de minéraux. Le lactosérum peut être valorisé en isolant d'une part le lactose, et d'autre part les protéines. Les protéines de lactosérum peuvent être également valorisées en tant qu'ingrédient pour la fabrication de laits infantiles. Le lactosérum déminéralisé, notamment le lactose, peut être utilisé dans la fabrication de confiseries, de gâteaux et de crèmes glacées, .de plats cuisinés, de pâtisseries,....

Les lactosérums peuvent être déminéralisés en subissant une étape de nanofiltration, suivie d'une électrodialyse ou d'un passage sur des résines échangeuses de cations et d'anions pour atteindre des taux de déminéralisation de 70 à 90%, voire supérieurs.

Les résines échangeuses d'ions génèrent cependant des volumes d'effluents salins de régénération qui sont importants, difficiles et couteux à traiter.

En parallèle, les consommateurs recherchent de façon croissante des ingrédients issus de l'industrie agroalimentaire qui préservent leurs propriétés naturelles initiales, et donc qui ne soient pas modifiés et/ou dénaturés, ou dans tous les cas le moins possible. De plus, il est également recherché des procédés de déminéralisation de produits laitiers, limitant, voir supprimant, la présence d'espèces exogènes minérales. Or, les résines échangeuses d'ions fonctionnent en échangeant des espèces minérales dans la composition à traiter contre des espèces minérales exogènes. Cependant, la suppression d'un ou plusieurs passages sur des résines échangeuses d'ions complique l'obtention de compositions protéiques laitières déminéralisées à des taux élevés, par exemple déminéralisées à 70%, 80% ou 90%. La déminéralisation se reportant sur d'autres systèmes de traitement, il existe un risque que les membranes de ces systèmes s'encrassent plus vite du fait de la charge minérale importante.

Des procédés de déminéralisation de lactosérum comprenant au moins une étape d'électrodialyse sont décrits dans WO 2019/180389 A1 et EP 3 597 045 A1, par exemple.

La présente invention vise ainsi à proposer un procédé de déminéralisation d'une composition protéique laitière amélioré, en particulier sans utilisation de résines échangeuses d'ions (anioniques et/ou cationiques).

La présente invention vise également à proposer un procédé de déminéralisation d'une composition protéique laitière limitant l'introduction de composés minéraux exogènes dans la composition protéique laitière.

### Exposé de l'invention

La présente invention pallie les problèmes précités en ce qu'elle a pour objet, selon un premier aspect, un procédé de fabrication d'une composition protéique laitière déminéralisée (CPL2), comprenant les étapes suivantes, en particulier effectuées en série:
(i)- fourniture d'une composition protéique laitière (CPL);
(ii)- électrodialyse de la composition protéique laitière (CPL) sur un électrodialyseur, comprenant des unités cellulaires comprenant, notamment constituées de, trois compartiments, et configuré pour substituer au moins un cation par au moins un ion hydrogène H⁺ dans la composition protéique laitière (CPL) pour obtenir une composition protéique laitière au moins partiellement déminéralisée et acidifiée (CPL1);
(iii)- électrodialyse de la composition protéique laitière (CPL1) obtenue à l'étape (ii) ;
(iv)- récupération de la composition protéique laitière déminéralisée (CPL2). Selon l'invention ledit procédé comprend aussi l'ajout d'au moins une solution basique à la composition protéique laitière au-cours de l'étape (iii) et/ou après l'étape (iii).

De manière générale, lors d'une électrodialyse, les espèces ionisées, minérales ou organiques, dissoutes, telles que des sels, acides ou bases, sont transportées à travers des membranes ioniques sous l'action d'un courant électrique. Une unité d'électrodialyse peut comprendre des membranes cationiques (perméables aux cations) MEC et/ou des membranes anioniques (perméables aux anions) MEA disposées parallèlement et de manière alternée. Sous l'action du champ électrique appliqué à l'aide d'une anode et d'une cathode, les MEC bloquent les anions et laissent passer les cations, tandis que les MEA bloquent les cations et laissent passer des anions. Il se crée alors des compartiments de concentration (concentrats) et des compartiments de dessalement. Ce type d'électrodialyse le plus courant, est une électrodialyse dont l'unité cellulaire de base comprend deux compartiments. L'unité cellulaire correspond, au plus petit motif de répétition, des opérations de concentration et de dessalement (un compartiment correspondant à une concentration ou à un dessalement). Les solutions sont renouvelées dans les compartiments par une circulation parallèle au plan des membranes. L'application d'un courant est assurée par deux électrodes parallèles au plan des membranes et placées aux extrémités de l'électrodialyseur.

De manière originale, la présente invention comprend l'utilisation d'un électrodialyseur comprenant trois compartiments pour la réalisation de l'étape (ii) configuré pour permettre une substitution des cations. Ainsi, en sus des compartiments de dessalement (dans lesquels les ions disparaissent) et des compartiments de concentration (dans lesquels les ions s'accumulent), l'électrodialyseur de l'étape ii) comprend des compartiments de conversion cationique.

La composition protéique laitière (CPL) obtenue à l'étape ii) est ainsi appauvrie en cations, et donc acidifiée (avec une baisse de pH).

La seconde électrodialyse (iii) est effectuée sur un électrodialyseur comprenant des cellules comprenant (constituées de) (chacune) deux compartiments. Un premier compartiment reçoit la composition protéique laitière à traiter (CPL1), et un second compartiment reçoit en début de l'électrodialyse (iii) de l'eau. L'eau va se charger en sels des ions extraits de la composition protéique laitière (CPL1) pour former une saumure.

L'électrodialyse (iii) permet de parfaire l'extraction des cations, et permet d'extraire les anions, non extraits par la première électrodialyse.

La déminéralisation obtenue pour la composition protéique laitière récupérée (CPL2) est poussée, et peut atteindre un taux de déminéralisation supérieur ou égal à 70%, en particulier supérieur ou égal à 75%, ou 80% ou encore 85%, plus particulièrement supérieur ou égal à 90%.

Avantageusement, le procédé selon l'invention ne génère pas d'effluents de régénération à traiter, ne consomme pas, ou très peu selon les différentes variantes développées ci-après, d'acide(s) exogène(s), et est donc moins polluant. Ce procédé peut être qualifié de partiellement éco-efficient.

La composition protéique laitière obtenue à l'étape ii) a un pH acide, en particulier inférieur ou égal au point isoélectrique des protéines (notamment sériques) de la CPL de l'étape i), notamment inférieur ou égal à 6, de préférence inférieur ou égal à 4.

Cette disposition favorise la maîtrise de la stabilité microbiologique. De plus, la composition protéique laitière peut alors subir un traitement thermique (en particulier une pasteurisation), dans des conditions de température et de durée différentes de celles appliquées en milieu non acide, ce qui permet de limiter la dénaturation des protéines. Les protéines laitières sont donc avantageusement moins dégradées.

De préférence, la température de la composition protéique laitière à l'étape ii) et/ou l'étape iii) est inférieure ou égale à 40°C, en particulier supérieure à 0°C.

La composition protéique laitière récupérée à l'étape iv), a un pH supérieur ou égal à 5, en particulier supérieur ou égal à 6, plus particulièrement supérieur ou égale à 6.2, notamment inférieur ou égal à 8.

### Composition protéique laitière

De préférence, la composition protéique laitière est choisie parmi : un lactosérum, tel qu'un lactosérum doux ou un lactosérum acide ou leur mélange ; un perméat d'ultrafiltration du lait ; un perméat de microfiltration du lait (ou désigné également par lactosérum idéal ou natif) ; un rétentat ou un perméat d'ultrafiltration de lactosérum; un rétentat ou un perméat d'ultrafiltration d'un perméat de microfiltration du lait ; ou un mélange de ces derniers (liste I).

L'ensemble des compositions protéiques laitières listées dans la liste I sont considérées comme des lactosérums ou dérivés des lactosérums.

Dans un mode de réalisation, la composition protéique laitière (CPL) et/ou le lactosérum doux et/ou le lactosérum acide et/ou le lactosérum natif est/sont brut(s), c'est-à-dire qu'il(s) n'a/ont pas subi d'opération visant à diminuer sa/leur charge minérale.

Le lactosérum ou la composition protéique laitière (CPL), cité(e) sans précision, peut être ainsi brut ou partiellement déminéralisé.

Un lactosérum doux est de préférence obtenu par un traitement chimique du lait, en particulier mettant en œuvre de la présure, permettant de récupérer d'une part les caséines et d'autre part le lactosérum doux.

Un lactosérum acide est de préférence obtenu par un traitement acide du lait, notamment mettant en œuvre de l'acide lactique et/ou de l'acide chlorhydrique, permettant de récupérer d'une part les caséines, et d'autre part le lactosérum acide.

La composition protéique laitière (CPL), notamment brut ou partiellement déminéralisée, et/ou le lactosérum, notamment brut ou partiellement déminéralisé, peut être pré concentré(e) afin d'augmentation son extrait sec, mécaniquement (par exemple par osmose inverse ou nanofiltration ou une combinaison de ces derniers) ou thermiquement (par exemple par évaporation de l'eau).

La composition protéique laitière (CPL), notamment brut ou partiellement déminéralisée, et/ou le lactosérum acide, notamment brut ou partiellement déminéralisé, et/ou le lactosérum doux, notamment brut ou partiellement déminéralisé, et/ou le perméat de microfiltration du lait, notamment brut ou partiellement déminéralisé, a/ont un extrait sec supérieur à 0% et inférieur ou égal à 16% environ, en particulier inférieur ou égal à 6% environ.

La composition protéique laitière (CPL), notamment brut ou partiellement déminéralisée, et/ou le lactosérum acide, notamment brut ou partiellement déminéralisé, et/ou le lactosérum doux, notamment brut ou partiellement déminéralisé, et/ou le perméat de microfiltration du lait, notamment brut ou partiellement déminéralisé, peut/peuvent subir une étape de pré-concentration, telle que définie ci-dessus, afin d'avoir un extrait sec supérieur ou égal à 8%environ et inférieur ou égal à 32% environ.

La composition protéique laitière est liquide lors de sa mise en œuvre dans le procédé selon l'invention. Elle peut être obtenue par reconstitution d'une solution liquide à partir de poudre(s) et/ou de liquide(s), notamment choisi(e)(s) dans la liste I ci-dessus.

De préférence, la composition protéique laitière à l'étape i) est partiellement déminéralisée. Cette disposition permet de diminuer la taille de l'électrodialyseur à trois compartiments lors de l'étape ii), et/ou la taille de l'électrodialyseur à deux compartiments lors de l'étape iii), i.e la surface membranaire active.

De préférence, le taux de déminéralisation de la composition protéique laitière à l'étape i) est supérieur ou égal à 30%.

De préférence, le taux de déminéralisation de la composition protéique laitière à l'étape i) est inférieur ou égal à 70%, de préférence inférieur ou égal à 60%, par exemple inférieur ou égal à 50%.

De préférence, le taux de déminéralisation de la composition protéique laitière obtenue/récupérée à l'étape iv) est supérieur ou égal à 70%, en particulier peut être supérieur ou égal à 80% (DM80) ou 85% (DM85), ou encore supérieur ou égal à 90% (DM90).

Dans un mode de réalisation, la composition protéique laitière a un extrait sec en masse supérieur à 1%, de préférence supérieur ou égal à 5%, et inférieur ou égal à 10%. Il s'agit par exemple d'un lactosérum non concentré.

Dans un autre mode de réalisation, la composition protéique laitière a un extrait sec en masse supérieur ou égal à 10%, et inférieur ou égal à 30% ; de préférence supérieur ou égal à 15% et inférieur ou égal à 25%. Il s'agit par exemple d'un lactosérum concentré. La concentration en matière sèche du lactosérum peut être effectuée par osmose inverse, nanofiltration ou tout autre mode de concentration thermique.

De manière générale, la composition protéique laitière peut être issue de toute femelle laitière.

De préférence, la composition protéique laitière est issue d'un lait choisi parmi : le lait de vache, le lait de chèvre, le lait de brebis, le lait d'ânesse, le lait de bufflonne, le lait de jument, ou un mélange de ces derniers, encore de préférence choisi parmi : le lait de vache, le lait de chèvre et le lait de brebis ou un mélange de ces derniers, en particulier il s'agit du lait de vache.

La composition protéique comprend des protéines laitières, en particulier des protéines sériques.

La composition protéique laitière (CPL), en particulier le lactosérum, comprend des protéines sériques, et ne comprend pas de caséines restées dans la partie prise en masse (coagulée) lors de la transformation du lait et/ou dans le rétentat de microfiltration du lait.

De préférence, le lactosérum doux, notamment brut, ou le lactosérum natif, notamment brut, présente l'une des propriétés suivantes, seule ou en combinaison :
- un pH compris entre 5.8 et 6.5 ;
- le rapport de la masse du lactose sur la masse de l'extrait sec est supérieur ou égal à 70%, notamment supérieur ou égal à 74% ;
- le rapport de la masse de la matière azotée totale sur la masse de l'extrait sec est supérieur ou égal à 10%, notamment supérieur ou égal à 12%, notamment inférieur ou égal à 30% ;
- le rapport de la masse des cendres sur la masse de l'extrait sec est supérieur ou égal à 8%, notamment inférieur ou égal à 10% ; et
- le rapport de la masse des acides organiques sur la masse de l'extrait sec est supérieur ou égal à 2%, notamment inférieur ou égal à 5%.

De préférence, le lactosérum acide, notamment brut, présente l'une des propriétés suivantes, seule ou en combinaison :
- un pH inférieur ou égal à 5, notamment inférieur ou égal à 4.5;
- le rapport de la masse du lactose sur la masse de l'extrait sec est supérieur ou égal à 55%, notamment inférieur ou égal à 65%, s'agissant d'un lactosérum issu de la fabrication en milieu acide de fromages ;
- le rapport de la masse du lactose sur la masse de l'extrait sec est supérieur ou égal à 70%, notamment inférieur ou égal à 85%, s'agissant d'un lactosérum issu de la fabrication en milieu acide de caséines;
- le rapport de la masse de la matière azotée totale (MAT) sur la masse de l'extrait sec est supérieur ou égal à 4%, notamment inférieur ou égal à 12% ;
- le rapport de la masse des cendres sur la masse de l'extrait sec est supérieur ou égal à 10%, notamment inférieur ou égal à 15% ; et
- le rapport de la masse des acides organiques sur la masse de l'extrait sec est supérieur ou égal à 10%, notamment inférieur ou égal à 20%, s'agissant d'un lactosérum issu de la fabrication en milieu acide lactique de fromages;
- le rapport de la masse des acides organiques sur la masse de l'extrait sec est supérieur ou égal à 2%, notamment inférieur ou égal à 5%, s'agissant d'un lactosérum issu de la fabrication en milieu acide de caséines.

Dans un mode de réalisation, le rapport de la masse du lactose sur la masse de l'extrait sec de la CPL (étape i) est supérieur ou égal à 50%, ou 60% ou 70%.

Dans un mode de réalisation, le rapport de la masse de la matière azotée totale sur la masse de l'extrait sec de la CPL (étape i) est supérieur ou égal à 5%, ou 10%, notamment supérieur ou égal à 12%, notamment inférieur ou égal à 30%. La déminéralisation consiste essentiellement dans le retrait total ou partiel des cendres présentes dans la composition protéique laitière, notamment le lactosérum.

### Définitions - Méthodes de mesure

Le taux massique en cendres (ou fraction massique sèche en cendres), en particulier de la composition protéique laitière (CPL, CPL1, CPL2), peut être déterminé avec la méthode normalisée NF V04-208 Octobre 1989, intitulée « Lait- Détermination des cendres- Méthode de référence », en particulier mettant en œuvre une méthode d'incinération à 525°C.

On comprend dans le présent texte par extrait sec en masse ou masse sèche totale, la masse sèche par exemple de la composition protéique laitière (CPL, CPL1, CPL2), obtenue après évaporation de l'eau jusqu'à obtention d'une masse sèche totale stable rapportée sur la masse totale de la composition protéique laitière, notamment à la pression atmosphérique. L'extrait sec en masse peut être déterminé avec la méthode normalisée ISO 6731: janvier 2011, « Lait, crème, et lait concentré non sucré - Détermination de la matière sèche (Méthode de référence) ».

On comprend par lactose dans le présent texte, le lactose tel que défini dans le Codex Alimentarius, Codex Stan 212-1999 : un constituant naturel du lait normalement obtenu à partir du lactosérum, en particulier avec une teneur en lactose anhydre supérieur ou égal à 99% masse/masse sur une base sèche.

La détermination de la teneur massique en lactose ou en sucre (ou fraction massique sèche) peut être effectuée par chromatographie liquide haute performance, en particulier à l'aide de la norme NF ISO 22662, datant de novembre 2007.

Les méthodes qui peuvent être utilisées pour quantifier les cations et les anions du lait (calcium, magnésium, sodium, potassium, phosphore/phosphate, citrate) peuvent être choisies parmi les méthodes suivantes : spectrométrie d'absorption moléculaire, méthode titrimétrique/ complexométrique, méthode électrochimique, spectrométrie atomique, électrophorèse capillaire, chromatographie ionique/détection conductimétrique, résonance magnétique nucléaire pour le ³¹ P, méthode enzymatique/détection UV.

La fraction massique sèche en matière azotée totale (MAT) peut être déterminée à l'aide de la norme NF EN ISO 8968-1 datant de mai 2014 (méthode Kjeldhal).

Les normes suivantes peuvent être utilisées pour déterminer la teneur massique : par exemple en chlorures : méthode par titrage potentiométrique (NF ISO 21422, février 2019) ; par exemple en phosphore total : méthode par spectrométrie d'absorption moléculaire (NF ISO 9874, avril 2008) ; par exemple en calcium : méthode titrimétrique (norme ISO 12081 :2010) ; par exemple en calcium, sodium potassium et magnésium : méthode spectrométrique par absorption atomique (norme ISO 8070 :2007) ou chromatographie ionique; par exemple en acide lactique/lactate via la norme ISO 8069 datant de 2005.

On désigne dans le présent texte par CPL, la composition protéique laitière selon l'invention.

De préférence, la composition protéique laitière (ou CPL), à l'étape i), a une conductivité supérieure ou égale à 1 mS/cm, encore de préférence supérieure ou égale à 3 mS/cm, préférentiellement supérieure ou égale à 8 mS/cm, en particulier supérieure ou égale à 10 mS/cm.

De préférence, la CPL, récupérée l'étape iv), a un taux massique en cendres inférieur ou égal à 2,5% par rapport à l'extrait sec , de préférence inférieur ou égal à 1,5% par rapport à l'extrait sec, encore de préférence inférieur ou égal à 1% par rapport à l'extrait sec, préférentiellement inférieur ou égal à 0,60% par rapport à l'extrait sec.

De préférence, la composition protéique laitière comprend les cations suivants : calcium, le magnésium, le sodium, le potassium, qui sont en particulier les cations visés par le procédé de déminéralisation selon l'invention.

De préférence, la composition protéique laitière comprend les anions suivants : le chlorure, le phosphate, le sulfate, le lactate, l'acétate, et le citrate, qui sont en particulier les anions visés par le procédé de déminéralisation selon l'invention.

Dans un mode de réalisation, les cations monovalents et les anions monovalents sont extraits au moins en partie de la CPL lors d'une étape préliminaire de déminéralisation, avant l'étape i), comprenant une étape de nanofiltration ou d'osmose inverse.

Avantageusement, le procédé ne comprend pas une étape de substitution anionique effectuée sur un électrodialyseur comprenant des cellules comprenant chacune trois compartiments, en particulier configuré pour substituer au moins un anion par au moins un ion hydroxyle OH⁻ dans la composition protéique laitière, notamment CPL1.

Avantageusement, le procédé ne comprend pas d'étape de substitution, notamment exclusivement, d'anions effectuée sur un électrodialyseur.

Avantageusement, le procédé ne comprend d'étape de substitution anionique effectuée sur un électrodialyseur comprenant des cellules comprenant des compartiments recevant la composition protéique laitière CPL1, dont chacun des compartiments est délimité entre deux membranes anioniques.

Le procédé selon l'invention comprend l'ajout d'au moins une solution basique, notamment l'ajout d'au moins une solution comprenant au moins un sel basique, à la composition protéique laitière au-cours de l'étape (iii), notamment pendant au moins une partie de l'étape (iii), et/ou après l'étape (iii).

Dans un mode de réalisation, la solution basique est une solution d'hydroxyde de soude (NaOH) ou une solution d'hydroxyde de potassium, ou un mélange desdites solutions.

Dans un mode de réalisation, la solution basique comprend au moins 0,5%, de préférence au moins 1% ou 3% ou 5%, en masse de la base (par exemple NaOH et/ou KOH) par rapport à sa masse totale (y compris l'eau).

Dans un premier mode de réalisation, on ajoute une solution basique à la composition protéique laitière après l'étape (iii), puis on récupère la composition protéique laitière (CPL2) dont le pH a été ajusté. Il peut s'agir d'une standardisation. La CPL2 récupérée comprend les ions, notamment les cations, des sels basiques ajoutés. Selon le profil minéral recherché, cette CPL2 peut convenir à certaines applications.

Dans un second mode de réalisation, éventuellement en combinaison avec le premier mode de réalisation, on ajoute une solution basique dans les compartiments de l'électrodialyseur de l'étape (iii) comprenant la composition protéique laitière CPL1. La remontée du pH est ainsi de préférence effectuée au-cours de l'électrodialyse (iii).

Avantageusement, ladite au moins une solution basique peut être ajoutée en continue ou séquentiellement, en particulier jusqu'à l'obtention du pH désiré et/ou la conductivité visée.

Avantageusement, ladite au moins une solution basique est de grade alimentaire. Avantageusement, la remontée du pH lors de l'étape iii), en particulier en sorte d'être supérieur ou égal au pKa d'au moins un acide organique de la composition traitée, permet d'obtenir la forme anionique de l'acide organique et ainsi de l'extraire à travers les membranes anioniques à l'étape iii). La mobilité des anions est améliorée, et leur extraction est ainsi facilitée.

Cet ajout peut être effectué en arrêtant l'éléctrodialyseur (iii) (donc hors tension), puis en ajoutant la solution basique à la CPL1, puis en redémarrant l'électrodialyseur ; ou concomitamment à l'extraction des ions (donc sous tension).

Avantageusement, l'ajout de la solution basique au-cours de l'étape (iii) est effectué lorsque la conductivité (mS/cm) de la composition protéique laitière traitée est abaissée au moins de 50%, de préférence au moins de 75% par rapport à la conductivité de la composition protéique laitière de l'étape (i).

Dans une variante, l'ajout de la solution basique est effectué durant au moins une partie de l'étape (iii) d'électrodialyse concomitamment à l'extraction des ions, en particulier des cations et des anions.

Outre l'amélioration de l'extraction des anions, les inventeurs se sont aperçus que cette disposition améliore l'extraction des cations divalents (Ca²⁺ ; Mg²⁺), notamment par rapport à un procédé de déminéralisation mettant en jeu une substitution, notamment exclusivement, cationique sur un électrodialyseur à trois compartiments (ESC), suivie d'une ED classique, et d'une substitution, notamment exclusivement, anionique sur un électrodialyseur à trois compartiments (ESA).

Avantageusement, l'ajout de la solution basique est effectué durant, notamment au moins une partie de l'étape (iii) d'électrodialyse, sous l'application d'un champ électrique. Le champ électrique est généré par l'application d'une tension (Volts) entre les électrodes, anode et cathode, de l'électrodialyseur (iii).

Dans une variante, l'ajout de la solution basique à la composition protéique laitière est effectué lorsque la composition protéique laitière a une conductivité inférieure ou égale à 1 mS/cm, et de préférence a un pH supérieur ou égal à 3.

Avantageusement, l'ajout de la solution basique à la composition protéique laitière est effectué lorsque la composition protéique laitière a une conductivité inférieure ou égale à 0,5 mS/cm, et de préférence a un pH supérieur ou égal à 4.

Dans une variante, après l'ajout de la solution basique, la composition protéique laitière a un pH supérieur ou égal à 4.5, de préférence supérieur ou égal à 5.0.

Dans un mode de réalisation, la composition protéique laitière récupérée (CPL2) après l'étape (iii) a un pH inférieur ou égal à 6.

Il est possible alors de standardiser la CPL2 par un ajout supplémentaire d'une solution basique s'il est nécessaire d'ajuster le pH entre 6 et 7.

Dans un mode de réalisation, la composition protéique laitière récupérée (CPL2) après l'étape (iii) a un pH supérieur ou égal à 6 après l'étape (iii). La concentration de la solution basique et sa durée d'application lors de l'étape (iii) sont ajustés pour atteindre ce pH.

Dans une variante, l'étape d'électrodialyse (iii) comprend l'extraction d'anions et de cations.

Dans une variante, l'étape (ii) est une étape de substitution exclusivement de cations.

Dans une variante, l'électrodialyseur de l'étape (ii) comprend des cellules comprenant (constituées de) (chacune) trois compartiments, et la composition protéique laitière (CPL) circule dans des compartiments délimités (chacun) entre deux membranes cationiques.

Dans une variante, la composition protéique laitière récupérée à l'étape (iv) (CPL2) comprend des ions phosphates (H₂PO₄⁻, HPO₄²⁻, PO₄³⁻) dont la masse de phosphore est supérieure ou égale à 110 mg, de préférence supérieure ou égale à 150 mg, pour 100g de masse sèche totale de ladite composition protéique laitière récupérée (CPL2).

Avantageusement, la composition protéique laitière récupérée (CPL2) comprend des ions phosphates (H₂PO₄⁻, HPO₄²⁻, PO₄³⁻) dont la masse de phosphore est inférieure ou égale à 210 mg, pour 100g de masse sèche totale de ladite composition protéique laitière récupérée (CPL2).

La masse des ions phosphates est calculée sur la base du phosphore.

Le profil ionique de la CPL2 récupérée comprend davantage d'ions phosphates que lorsque le procédé comprend, après l'étape (ii), une étape d'électrodialyse d'extraction des anions et des cations puis une étape d'électrodialyse de substitution exclusivement anionique.

Dans une variante, la composition protéique laitière récupérée à l'étape (iv) (CPL2) comprend des ions sodium ou potassium, dont la masse est supérieure ou égale à 20 mg, de préférence supérieure ou égale à 30 mg, pour 100g de masse sèche totale de ladite composition protéique laitière récupérée (CPL2).

Dans un mode de réalisation, la composition protéique laitière récupérée à l'étape (iv) (CPL2) comprend des ions sodium ou potassium, dont la masse est inférieure ou égale à 80 mg, de préférence inférieur ou égale à 60 mg, pour 100g de masse sèche totale de ladite composition protéique laitière récupérée (CPL2).

Dans un mode de réalisation, la composition protéique laitière (CPL2) comprend des ions sodium et/ou potassium issus de ladite au moins une solution basique ajoutée.

Dans une variante, les compartiments de l'électrodialyseur de l'étape (ii) recevant la composition protéique laitière (CPL) sont délimités chacun entre deux membranes cationiques.

Dans une variante, le procédé de fabrication comprend une étape de traitement (v) d'au moins une partie du ou des sel(s) choisi(s) parmi les sels suivants :
- le ou les sel(s) issu(s) directement de l'étape d'électrodialyse ii),
- le ou les sel(s) issu(s) indirectement de l'étape d'électrodialyse ii),
- le ou les sel(s) issu(s) directement de l'étape d'électrodialyse iii),
- le ou les sel(s) issu(s) indirectement de l'étape d'électrodialyse iii),
- le ou les sel(s) issu(s) d'une étape de déminéralisation préliminaire effectuée sur la composition protéique laitière en amont de l'étape i),
- un mélange de ces derniers, Ladite étape de traitement (v) étant configurée pour produire un ou des sel(s) acide(s) d'une part, et/ou un ou des sel(s) basique(s).

On comprend par le sel est issu directement de l'étape ii) et/ou iii) et/ou i) que ce dernier n'a pas subi une étape vi) ou vii) définie ci-après, en particulier une étape de nanofiltration.

On comprend par le sel est issu indirectement de l'étape ii) et/ou iii) et/ou i) que ce dernier a subi une étape vi) ou vii) définie ci-après, en particulier une étape de nanofiltration.

Le ou les sel(s) mis en œuvre dans le procédé selon l'invention est/sont de préférence choisi(s) parmi: un chlorure d'un cation monovalent ; un chlorure d'un cation divalent ; en particulier le chlorure de sodium, le chlorure de potassium, et le chlorure de calcium; un sulfate d'un cation monovalent, un sulfate d'un cation divalent ; en particulier le sulfate de sodium, le sulfate de potassium, et le sulfate de calcium ; un phosphate d'un cation monovalent, un phosphate d'un cation divalent ; en particulier le phosphate de sodium, le phosphate de potassium, et le phosphate de calcium ; et un mélange de ces derniers.

Dans une variante, l'étape de traitement (v) consiste en une étape d'électrodialyse effectuée sur un électrodialyseur à membrane(s) bipolaire(s). Avantageusement, une membrane bipolaire est composée d'une couche échangeuse de cations et d'une couche échangeuse d'anions séparées par une jonction hydrophile.

Dans une variante, l'électrodialyseur à membrane(s) bipolaire(s), à l'étape (v), comprend des unités cellulaires comprenant trois compartiments A, B et C, les compartiments A et B sont alimentés en eau et le compartiment C est alimenté par le ou lesdits sel(s), en particulier le compartiment C est disposé entre les compartiments A et B.

De préférence, le ou les sels est/sont le sel de chlorure de sodium et/ou le sel de chlorure de potassium (NaCl et/ou KCl).

Dans un mode de réalisation, les unités cellulaires de l'électrodialyseur à l'étape v) comprennent chacune un premier compartiment délimité entre une membrane bipolaire et une membrane anionique, un second compartiment délimité entre une membrane anionique et une membrane cationique, et un troisième compartiment délimité entre une membrane cationique et une membrane bipolaire.

De préférence, le premier compartiment et le troisième compartiment sont alimentés en eau, et le second compartiment, disposé entre les premier et troisième compartiments, est alimenté en sel(s).

Avantageusement, l'étape v), en particulier l'étape d'électrodialyse à membrane(s) bipolaire(s) v), permet de générer un acide, notamment l'acide chlorhydrique et/ou l'acide sulfurique, et une base, notamment l'hydroxyde de sodium et/ou l'hydroxyde de potassium, à partir des flux de sel(s) issu(s) des étapes ii) et/ou iii).

Cette disposition permet de mettre en œuvre les étapes d'électrodialyse ii) et/ou iii) avec des sels acides ou basiques issus de la composition protéique laitière elle-même. Le procédé permet donc de supprimer, ou à tout le moins de réduire très significativement, l'introduction de composés minéraux exogènes.

Le ou les sels, notamment le sel de chlorure de sodium, peut/peuvent provenir aussi, en partie, de la ou des étape(s) de déminéralisation préliminaire(s) appliquée(s) à la composition protéique laitière à l'étape i), notamment issu d'une étape de nanofiltration.

Dans une variante, au moins une partie du ou des sel(s), notamment d'acide chlorhydrique et/ou d'acide sulfurique, obtenu(s) lors de l'étape de traitement (v), est/sont alimenté(s) à l'un des trois compartiments de l'électrodialyseur à l'étape ii).

Dans une variante, la solution basique ajoutée comprend au moins en partie (est) le sel basique ou les sels basiques, notamment de l'hydroxyde de sodium et/ou de l'hydroxyde de potassium, obtenu(s) lors de l'étape de traitement (v).

Avantageusement, la base utilisée est issue de la CPL elle-même, ce qui évite l'ajout d'une base exogène.

Dans une variante, la solution basique est issue au moins en partie du recyclage d'un effluent issu de l'étape ii) et/ou de l'étape iii).

On comprend par effluent, une saumure issue de l'ED (ii) ou de l'ED (iii). Avantageusement, le recyclage est effectué par l'intermédiaire de l'étape v).

Dans une variante, la composition protéique laitière est choisie dans la liste comprenant : un lactosérum, tel qu'un lactosérum doux ou un lactosérum acide ou leur mélange; un perméat d'ultrafiltration du lait, notamment du lait écrémé ; un perméat de microfiltration du lait (également désigné comme lactosérum natif ou idéal) ; un rétentat ou un perméat d'ultrafiltration de lactosérum; un rétentat ou un perméat d'ultrafiltration d'un perméat de microfiltration du lait ; ou un mélange de ces derniers, de préférence un lactosérum.

Dans une variante, l'étape d'électrodialyse ii) produit un mélange comprenant au moins un sel, notamment de chlorure, d'un cation monovalent, tel que un sel de chlorure de sodium et/ou un sel de chlorure de potassium, et au moins un sel, notamment de chlorure, d'un cation divalent, tel que un sel de chlorure de calcium (CaCl₂), et ledit mélange subit une étape de séparation (vi), notamment une étape de nanofiltration.

Avantageusement, l'étape de séparation (vi) permet la séparation du ou des sel(s) d'un cation monovalent, et du ou des sel(s) d'un cation divalent.

Dans une variante, l'étape (iii) comprend l'électrodialyse de la composition protéique laitière au moins partiellement déminéralisée et acidifiée (CPL1) obtenue à l'étape ii) sur un électrodialyseur comprenant des unitaires cellulaires comprenant (constituées de) (chacune) deux compartiments. L'électrodialyseur comprend plusieurs cellules, par exemple au moins cinq cellules, de préférence au moins quinze cellules, encore de préférences au moins 25 cellules. Dans un premier mode de réalisation, l'électrodialyseur comprend au moins une unité cellulaire comprenant un premier compartiment délimité entre une membrane cationique et une membrane anionique, et un deuxième compartiment délimité entre une membrane anionique, en particulier celle du premier compartiment, et une membrane cationique, en particulier celle du premier compartiment.

De préférence, le premier compartiment est alimenté par la composition protéique laitière (CPL1) partiellement déminéralisée et acidifiée obtenue à l'étape ii). De préférence, le second compartiment est alimenté par de l'eau.

Cette étape permet avantageusement d'extraire à la fois des anions et des cations dans CPL1.

Cette étape d'électrodialyse à deux compartiments effectuée après l'étape ii) permet également d'atteindre un taux d'abattement de plus de 80%, 85% ou 90% en cations et en anions, en particulier avec l'ajout de soude.

L'étape (ii) peut être effectuée avant l'étape viii) de traitement thermique décrite ci-après dans le présent texte.

Dans une variante, l'étape d'électrodialyse iii) produit un mélange comprenant au moins un sel d'un anion et/ou d'un cation monovalent et/ou au moins un sel d'un anion et/ou d'un cation divalent, notamment un sel de chlorure de sodium (NaCl) et /ou un sel de phosphate de sodium, et ce mélange subit une étape de séparation (vii), notamment une étape de nanofiltration.

Avantageusement, l'étape de séparation (vii) permet la séparation du ou des sel(s) d'un anion monovalent, et du ou des sel(s) d'un anion divalent.

Avantageusement, les étapes vi) et/ou vii) décrites dans le présent texte permettent de compléter l'électrodialyse à membrane(s) bipolaire(s), en particulier si l'étape ii) est effectuée sans membranes permsélectives, en évitant la précipitation de cations divalent(s), notamment du calcium et/ou du magnésium, sur les membranes, en particulier sur les membranes cationiques de l'électrodialyse bipolaire de l'étape v).

Dans une variante, le sel d'un cation monovalent, en particulier le sel de chlorure d'un cation monovalent, de préférence le chlorure de sodium, collecté à l'issu de l'étape de séparation (vi) et/ou l'étape de séparation (vii), est alimenté à l'étape d'électrodialyse ii).

Cette disposition s'applique en particulier lorsque l'étape ii) est effectuée avec des membranes permsélectives définies ci-après.

Dans une variante, le sel d'un cation monovalent, en particulier le sel de chlorure d'un cation monovalent, de préférence le chlorure de sodium ou potassium, collecté à l'issu de l'étape de séparation (vi) et/ou l'étape de séparation (vii) subit, au moins en partie, l'étape de traitement (v).

Cette disposition s'applique en particulier lorsque l'étape (ii) est effectuée sans membranes permsélectives définies ci-après.

Avantageusement, l'étape de traitement (v) permet la fabrication d'un sel basique dudit cation monovalent, en particulier d'hydroxyde de soude ou d'hydroxyde de potassium.

Avantageusement, le sel basique issu de l'étape de traitement (v) est utilisé, notamment au moins en partie, comme ladite au moins une solution basique selon l'invention.

Dans une variante, l'électrodialyseur à l'étape ii) comprend au moins une membrane permsélective aux cations monovalents.

Ainsi, la membrane permsélective aux cations monovalents (ou aux anions monovalents), est traversée uniquement par des cations monovalents (ou par des anions monovalents), et n'est pas traversée par des anions (ou des cations), et des cations (ou des anions) ayant une valence supérieure à 1, notamment divalents.

Dans une variante, les unités cellulaires comprenant trois compartiments de l'électrodialyseur à l'étape ii) comprennent au moins une unité cellulaire comprenant, de préférence chacune des unités cellulaires comprend :
- un premier compartiment délimité entre une membrane permsélective aux cations monovalents et une membrane cationique ;
- un second compartiment délimité entre deux membranes cationiques ;
- un troisième compartiment délimité entre une membrane cationique et une membrane permsélective aux cations monovalents.

Dans une autre variante, les unités cellulaires comprenant trois compartiments de l'électrodialyseur à l'étape ii) comprennent au moins une unité cellulaire comprenant, de préférence chacune des unités cellulaires comprend :
- un premier compartiment délimité entre une membrane anionique et une membrane cationique;
- un second compartiment délimité entre deux membranes cationiques, et
- un troisième compartiment délimité entre une membrane cationique et une membrane anionique.

L'étape (ii) de substitution cationique peut ainsi être effectuée à l'aide de membrane(s) permsélective(s) ou non.

Dans une sous-variante (des variantes de l'étape ii) ci-avant), le premier compartiment est alimenté par au moins un sel acide, de préférence un sel d'acide chlorhydrique, le second compartiment est alimenté par la composition protéique laitière de l'étape i), et le troisième compartiment est alimenté par au moins un sel de chlorure d'un cation monovalent, de préférence de sodium, ou par de l'eau.

Dans une variante, le procédé comprend une étape de traitement thermique (viii), effectuée après l'étape (ii), et de préférence avant l'étape iii).

De préférence, lors de cette étape (viii), la composition protéique laitière est à une température supérieure ou égale à 70°C et inférieure ou égale à 110°C, pendant un temps supérieur ou égal à 5 secondes et inférieur ou égal à 10 minutes.

Avantageusement, l'étape de traitement thermique est une étape de pasteurisation.

Le milieu acide de la composition protéique laitière favorise l'élimination des germes, y compris ceux les plus difficiles à détruite, par exemple les germes sporulés.

Dans une variante, la composition protéique laitière à l'étape i) est un lactosérum, en particulier issu de l'agriculture biologique.

Dans une variante, la composition protéique laitière à l'étape i) est un lactosérum partiellement déminéralisé, notamment ayant subi au moins une étape choisie parmi : une étape de nanofiltration, une étape d'osmose inverse, une étape d'évaporation, et une combinaison de ces dernières.

Ces étapes permettent également de concentrer la CPL, ie d'augmenter son extrait sec en masse.

Aussi décrite mais ne faisant pas partie de l'invention est une composition protéique laitière déminéralisée susceptible d'être obtenue selon l'une quelconque des variantes de réalisation/modes de réalisation en référence au premier aspect de l'invention.

Dans une variante, ladite composition protéique laitière comprend des ions phosphates (H₂PO₄⁻, HPO₄²⁻, PO₄³⁻) dont la masse de phosphore est supérieure ou égale à 110 mg, de préférence supérieure ou égale à 150 mg, pour 100g de masse sèche totale de ladite composition protéique laitière récupérée (CPL2), et comprend des ions sodium ou potassium, dont la masse est supérieure ou égale à 20 mg, de préférence supérieure ou égale à 30 mg, pour 100g de masse sèche totale de ladite composition protéique laitière récupérée (CPL2), de préférence les ions sodium et/ou potassium sont au moins en partie recyclé(s) et/ou exogène(s).

Avantageusement, ladite composition protéique laitière comprend des ions phosphates (H₂PO₄⁻, HPO₄²⁻, PO₄³⁻) dont la masse de phosphore est inférieure ou égale à 210 mg, pour 100g de masse sèche totale de ladite composition protéique laitière récupérée (CPL2), et comprend des ions sodium ou potassium, dont la masse est inférieure ou égale à 80 mg, de préférence inférieur ou égale à 60 mg, pour 100g de masse sèche totale de ladite composition protéique laitière récupérée (CPL2).

De préférence, les ions sodium et/ou potassium sont issus au moins de la solution basique ajoutée, en particulier du sel basique recyclée à l'étape (v).

De préférence, les ions sodium et/ou potassium sont au moins en partie des ions recyclés issus de ladite composition protéique laitière déminéralisée.

De préférence, les ions sodium et/ou potassium sont au moins en partie des ions exogènes à ladite composition protéique laitière déminéralisée.

On comprend par ions recyclés, les ions extraits de la composition protéique laitière et qui ont été ajoutés à cette dernière.

On comprend par ions exogènes, des ions non issus de la composition protéique laitière.

Le taux de déminéralisation de la composition protéique laitière est supérieur ou égale à 80%, ou 85% ou 90%.

La présente invention a pour objet, selon un troisième aspect, une installation pour la mise en œuvre du procédé selon l'une quelconque des variantes de réalisation/modes de réalisation selon un premier et/ou un second aspect(s) de l'invention, comprenant :
a) un premier électrodialyseur comprenant une première entrée destinée à recevoir une composition protéique laitière (CPL), ledit électrodialyseur comprenant des unités cellulaires comprenant (constituée) (chacune de) trois compartiments, et configuré pour substituer au moins un cation par au moins un ion hydrogène H⁺ dans la composition protéique laitière (CPL), et une première sortie pour une composition protéique laitière au moins partiellement déminéralisée et acidifiée (CPL1);
b) un second électrodialyseur comprenant une première entrée destinée à recevoir la composition protéique laitière (CPL1) obtenue à l'étape (ii), et une première sortie pour la composition protéique laitière (CPL2).

Le premier électrodialyseur permet la réalisation de l'étape (ii) et le second électrodialyseur permet la réalisation de l'étape (iii).

Le premier électrodialyseur et/ou le second électrodialyseur peut/peuvent comprendre l'une quelconque des variantes/modes de réalisation décrits ci-avant en référence au premier aspect de l'invention, en particulier concernant les électrodialyseurs des étapes (ii) et (iii).

Selon l'invention, l'installation comprend aussi:
c) un dispositif comprenant une solution basique et configuré pour être en communication fluidique durant un temps donné avec les compartiments du second électrodialyseur destinés à recevoir la composition protéique laitière (CPL1), de préférence sous l'application d'un champ électrique. Avantageusement, le dispositif alimente ladite au moins une solution basique aux compartiments du second électrodialyseur recevant CPL1 concomitamment à l'extraction des anions et des cations de CPL1 durant une durée déterminée. Dans une variante, le premier électrodialyseur comprend une seconde entrée destinée à recevoir au moins un sel acide, en particulier un sel d'acide chlorhydrique et/ou un sel d'acide sulfurique, et une troisième entrée destinée à recevoir de l'eau ou un sel, notamment un sel de chlorure d'un cation monovalent (NaCl et/ou KCl).

Dans une variante, l'installation comprend une unité de traitement (v), notamment un électrodialyseur comprenant des cellules comprenant trois compartiments et des membranes bipolaires.

Dans une variante, ladite unité de traitement (v) comprend une première entrée recevant de l'eau et une seconde entrée recevant un sel d'un cation monovalent (NaCl, KCl), et une première sortie pour un sel acide (HCl), et une seconde sortie pour un sel basique (NaOH et/ou KOH).

Dans un mode de réalisation, ledit sel basique est alimenté audit dispositif c) comprenant une solution basique.

Dans un mode de réalisation, le sel acide est alimenté à la seconde entrée du premier électrodialyseur a).

Dans une variante, l'installation comprend une unité de séparation des sels, en particulier pour la réalisation de l'étape (vi) ou de l'étape (vii).

De préférence, l'unité de séparation (vi) ou (vii) comprend une première entrée recevant au moins un sel d'un anion et/ou d'un cation monovalent et/ou au moins un sel d'un anion et/ou d'un cation divalent, notamment un sel de chlorure de sodium (NaCl) et /ou un sel de phosphate de sodium, et :
- une première sortie pour le ou les sel(s) d'un cation monovalent et une seconde sortie pour le ou les sel(s) d'un cation divalent, lorsque la première entrée reçoit des sels de cations monovalents et divalents ;ou
- une première sortie pour le ou les sel(s) d'un anion monovalent et une seconde sortie pour le ou les sel(s) d'un anion divalent, lorsque la première entrée reçoit des sels d'anions monovalents et divalents.

De préférence, l'unité de séparation (vi) ou (vii) est une unité de nanofiltration.

### Brève description des dessins

L'invention sera mieux comprise à la lecture de la description qui suit des modes de réalisation de l'invention donnés à titre d'exemples non limitatifs, en référence aux dessins annexés, sur lesquels :
[Fig. 1]La figure 1 représente schématiquement les différentes étapes d'un premier exemple de procédé de fabrication d'une composition protéique laitière déminéralisée ;
[Fig. 2]La figure 2 représente schématiquement un exemple de l'étape de traitement v) selon l'invention, en particulier une unité cellulaire de l'électrodialyseur à membranes bipolaires mise en œuvre dans les premier et second exemples de procédés représentés aux figures 1 et 3 ; et
[Fig. 3]La figure 3 représente schématiquement les différentes étapes d'un second exemple de procédé de fabrication d'une composition protéique laitière déminéralisée.

### Description des modes de réalisation à titre non limitatif

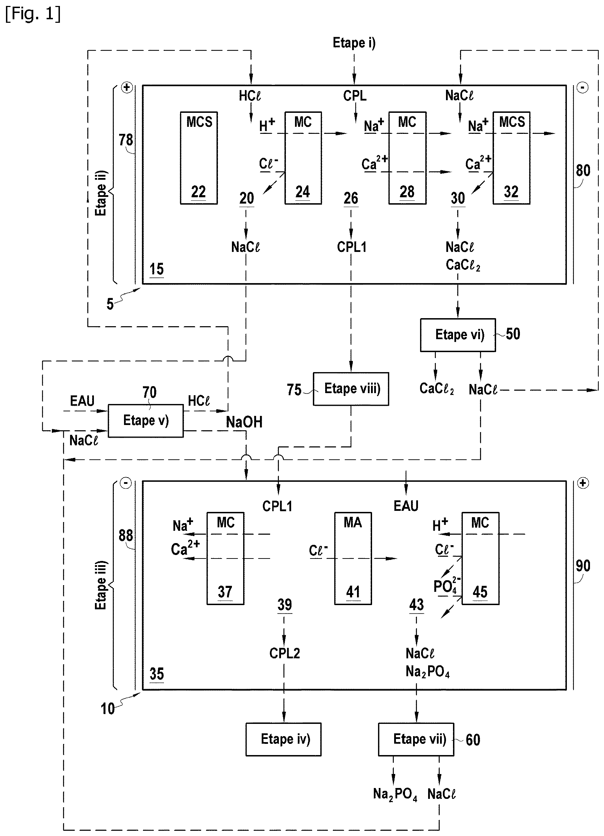

Le premier exemple de procédé de fabrication d'une composition protéique laitière déminéralisée représenté à la figure 1 comprend deux électrodialyseurs (ED) 5 et 10. Les unités cellulaires 15 de l'ED 5 sont à trois compartiments. Les unités cellulaires 35 de l'ED 10 sont à deux compartiments. Une seule unité cellulaire 15 de l'électrodialyseur 5 est représentée à la figure 1. Cette unité cellulaire 15 comprend un premier compartiment 20 délimité entre une membrane permsélective cationique 22 et une membrane cationique 24, un second compartiment 26 délimité entre la membrane cationique 24 et la membrane cationique 28, et un troisième compartiment 30 délimité entre la membrane cationique 28 et la membrane permsélective cationique 32. Une seule unité cellulaire 35 de l'électrodialyseur 10 est représentée à la figure 1. Cette unité cellulaire 35 comprend un premier compartiment 39 délimité entre une membrane cationique 37 et une membrane anionique 41, un second compartiment 43 délimité entre la membrane anionique 41 et une membrane cationique 45.

Les membranes permsélectives cationiques 22 et 32 ne peuvent être traversées que par des cations monovalents. Les électrodialyseurs 5 et 10 comprennent chacun une cathode (80,88) et une anode (78,90) générant un courant traversant les solutions conductrices passant dans les compartiments des unités cellulaires 15 et 35.

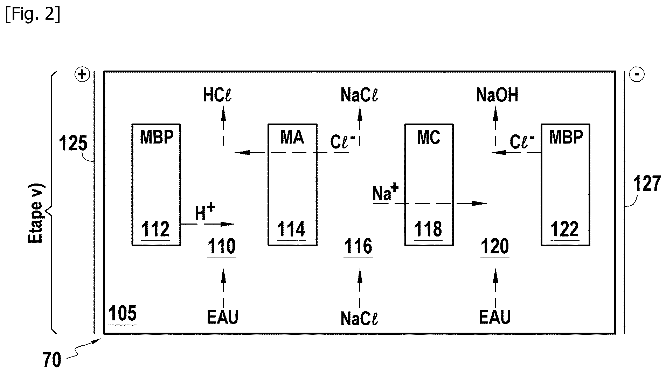

Le procédé peut comprendre également un premier dispositif de nanofiltration 50 pour la réalisation de l'étape vi) et/ou un second dispositif de nanofiltration 60 pour la réalisation de l'étape vii), et/ou un électrodialyseur à membranes bipolaires 70 pour la réalisation de l'étape v) selon l'invention, en particulier détaillé à la figure 2. Ce premier exemple de procédé comprend également une unité de traitement thermique 75 pour effectuer l'étape de traitement de thermique viii), notamment une pasteurisation.

En fonctionnement, une composition protéique laitière CPL, notamment un lactosérum, éventuellement déminéralisée à au moins 30%, est fournie dans une étape i) puis alimentée au second compartiment 26 de l'électrodialyseur 5 pour la réalisation de l'étape (ii). En même temps, du sel acidifié, notamment une solution d'acide chlorhydrique, est alimenté au premier compartiment 20, et une saumure, notamment un sel de chlorure de sodium, est alimenté au troisième compartiment 30. Les ions H⁺ traversent la membrane cationique 24 et sont remplacés par les ions Na⁺ venant du troisième compartiment 30 et donc traversant la membrane permsélective 32 ou 22 sous l'effet du champ électrique. Les cations, mono et/ou divalents, en particulier les ions Na⁺ et les ions Ca²⁺ traversent la membrane cationique 28, sous l'effet du champ électrique, en direction de la cathode 80, et sont substitués par des ions H⁺ venant du premier compartiment 20. La composition protéique laitière obtenue CPL1 à l'étape ii) est ainsi partiellement déminéralisée, les cations ayant été substitués par des H⁺, et acidifiée. Le **pH** de CPL1 est inférieur ou égal à 4. Le troisième compartiment 30 comprend un mélange de sels de chlorure, notamment un sel de chlorure de calcium (CaCl₂) et un sel de chlorure de sodium (NaCl), issus de la composition protéique laitière CPL. Les ions monovalents (ex : Na⁺ ; K⁺) traversent ainsi la membrane permsélective cationique 22 ou 32 et alimentent le premier compartiment 20 tandis que les ions divalents (ex : Ca²⁺) restent dans le troisième compartiment 30.

La composition protéique laitière CPL1 acidifiée peut subir un traitement thermique à l'étape viii), (chauffée à 90°C, pendant quelques minutes) afin d'améliorer sa stabilité bactériologique. Avantageusement, la composition CPL1 étant acidifiée, les conditions du traitement thermique peuvent être plus poussées que habituellement et définies en sorte que les protéines ne soient pas altérées.

Le mélange de sels issus du troisième compartiment 30 peut subir une étape vi) de nanofiltration sur l'unité de nanofiltration 50 afin d'augmenter la pureté du sel de chlorure de sodium issu du troisième compartiment 30 par rétention des sels divalents, tel que le chlorure de calcium CaCl₂. Le sel de chlorure de sodium purifié peut ainsi avantageusement être alimenté au troisième compartiment 30.

La composition CPL1, notamment pasteurisée, subit une seconde étape d'électrodialyse iii) sur l'électrodialyseur 10.

Le premier compartiment 39 est alimenté par CPL1 thermisée et acidifiée. Le second compartiment 43 reçoit de l'eau. Les anions (chlorures, phosphates) traversent la membrane anionique 41 et sont maintenus dans le second compartiment. Les cations (sodium, magnésium) traversent la membrane cationique 37, et restent dans le compartiment saumure. La composition CPL2 récupérée est ainsi déminéralisée et désacidifiée.

Dans le deuxième compartiment 43, le mélange des sels de chlorure de sodium et/ou de chlorure de potassium (NaCl ,KCl) et des sels de phosphates, issus de CPL1, peuvent subir une étape vii) de nanofiltration permettant d'augmenter la pureté du sel de chlorure de sodium ou de potassium par rétention des ions phosphates.

Le procédé selon l'invention, et dans cet exemple précis lepremier exemple de procédé, peut comprendre avantageusement également une étape v) de traitement du sel de chlorure de sodium ou de potassium sur une unité d'électrodialyse à membranes bipolaires à trois compartiments 70 permettant de régénérer l'acide, principalement HCl, et la base, principalement de l'hydroxyde de sodium ou de potassium, à partir :
- des flux du ou des sel(s), notamment NaCl et/ou KCI, issus du premier compartiment 20 de l'étape ii) d'électrodialyse cationique, et/ou
- éventuellement du NaCl et/ou KCI issu de la ou des étape(s) de pré-déminéralisation effectuée(s) en amont sur la composition CPL de l'étape i) ;
- et/ou du NaCl et/ou KCI de grade alimentaire ;
- et/ou des flux de NaCl et/ou KCl issus de l'étape (vi) et/ou de l'étape (vii).

La dite étape de pré-déminéralisation consiste de préférence en une étape de nanofiltration.

Dans un mode de réalisation préféré, le sel basique recyclé à l'étape (v) est ajouté à CPL1 dans le compartiment 39, en particulier lors de l'extraction des anions et des cations, c'est-à-dire sous l'effet d'un champ électrique.

Dans un autre mode de réalisation, l'électrodialyseur 10 est arrêté puis un sel basique est ajouté à CPL1 dans le compartiment 39, puis l'électrodialyseur est redémarré pour poursuivre la déminéralisation.

Dans un mode de réalisation, éventuellement combiné avec l'un ou l'autre des deux modes précédents, on ajoute une solution basique après l'étape (iii).

A l'exception du sel utilisé lors du démarrage de l'étape v), les sels acides et basiques utilisés pour la mise en œuvre des étapes d'électrodialyse ii) et iii) sont issus de la composition protéique laitière CPL1, ce qui évite l'introduction de composés minéraux exogènes.

La figure 2 représente l'électrodialyseur 70 et une unité cellulaire 105 de ce dernier comprenant un premier compartiment 110 délimité entre une membrane bipolaire 112 et une membrane anionique 114, un second compartiment 116 délimité entre la membrane anionique 114 et une membrane cationique 118, et un troisième compartiment 120 délimité entre la membrane cationique 118 et une membrane bipolaire 122. Le sel, notamment le chlorure de sodium ou de potassium, est alimenté au deuxième compartiment 116. Les ions chlorures traversent la membrane anionique 114 sous l'effet du champ électrique vers l'anode 125 tandis que les ions Na⁺, K⁺ traversent la membrane cationique sous l'effet du champ électrique vers la cathode 127. Cette étape v) permet de régénérer les sels acides et basiques, en particulier l'acide chlorhydrique et l'hydroxyde de sodium, lesquels peuvent être ensuite alimentés pour le sel acide au premier compartiment de l'unité cellulaire 15 ou 215 de l'étape ii), et/ou pour le sel basique au premier compartiment 39 ou 239 de l'unité cellulaire 35 ou 235 de l'étape iii) lors de l'étape d'ajout d'au moins une solution basique selon l'invention.

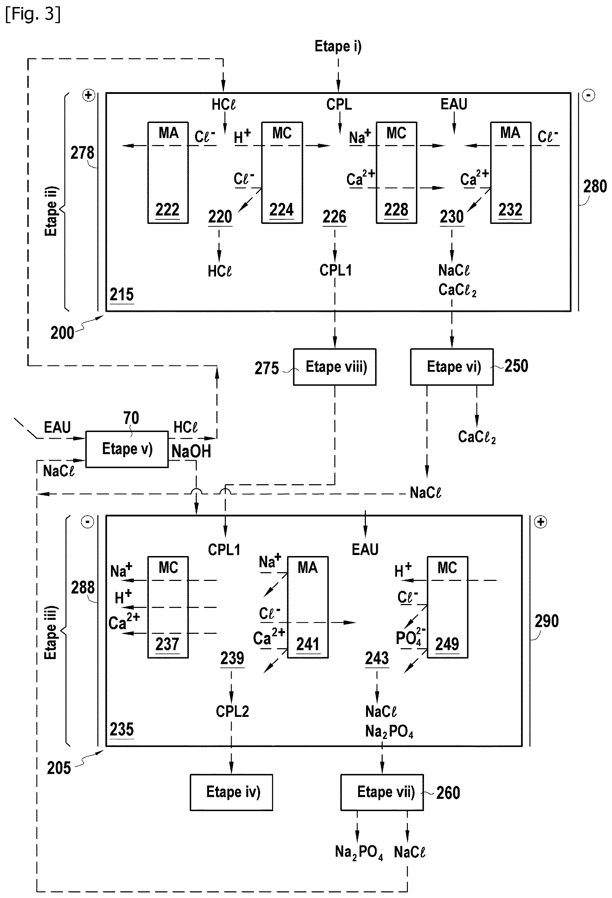

Le second exemple de procédé de fabrication d'une composition protéique laitière déminéralisée représenté à la figure 3 comprend deux électrodialyseurs 200 et 205. L'électrodialyseur 200 comprend des unités cellulaires 215 comprenant (chacune) trois compartiments. L'électrodialyseur 205 comprend des unités cellulaires 235 comprenant (chacune) deux compartiments. Une seule unité cellulaire 215 de l'électrodialyseur 200 est représentée à la figure 3. Cette unité cellulaire 215 comprend un premier compartiment 220 délimité entre une membrane anionique 222 et une membrane cationique 224, un second compartiment 226 délimité entre la membrane cationique 224 et la membrane cationique 228, et un troisième compartiment 230 délimité entre la membrane cationique 228 et la membrane anionique 232.

Une seule unité cellulaire 235 de l'électrodialyseur 205 est également représentée à la figure 3. Cette unité cellulaire 235 comprend un premier compartiment 239 délimité entre une membrane cationique 237 et une membrane anionique 241, un second compartiment 243 délimité entre la membrane anionique 241 et une membrane cationique 249.

Les électrodialyseurs 200 et 205 comprennent chacun une anode (278, 290) et une cathode (280, 288) générant un courant traversant les solutions conductrices passant dans les compartiments des unités cellulaires 215 et 235. Le procédé peut comprendre également un premier dispositif de nanofiltration 250 pour la réalisation de l'étape vi), et/ou un second dispositif de nanofiltration 260 pour la réalisation de l'étape vii), et/ou un électrodialyseur à membranes bipolaires à trois compartiments 70, en particulier détaillé à la figure 2 pour la réalisation de l'étape v). De plus, le procédé peut comprendre une unité de traitement thermique 275 pour effectuer l'étape de traitement de thermique viii), notamment une pasteurisation.

En fonctionnement, une composition protéique laitière CPL, notamment du lactosérum déminéralisée à au moins 30%, est alimentée au second compartiment 226 de l'électrodialyseur 200. En même temps, du sel acidifié, notamment une solution d'acide chlorhydrique, est alimenté au premier compartiment 220, et de l'eau est alimentée au troisième compartiment 230. Seuls les ions H⁺ traversent la membrane cationique 224 vers le second compartiment 226 en direction de la cathode 280, et les ions chlorures traversent la membrane anionique 232 vers le troisième compartiment 230 en direction de l'anode 278. Dans le second compartiment 226, les cations mono ou divalents, tels que Na+ et Ca²⁺, traversent la membrane cationique 228 sous l'effet du champ électrique en direction de la cathode 280, et sont substitués par des ions H⁺ venant du premier compartiment 220. La composition protéique laitière obtenue CPL1 à l'étape ii) est ainsi partiellement déminéralisée, les cations ayant été substitués par des ions H⁺, et acidifiée. Le pH de CPL1 est inférieur ou égal à 4. Le troisième compartiment 230 comprend un mélange de CaCl₂ et de NaCl issus de la composition protéique laitière CPL. Les ions chlorures du premier compartiment 220 traversent la membrane anionique 222 ou 232 et alimentent le troisième compartiment 230.

La composition protéique laitière CPL1 acidifiée subit de préférence un traitement thermique à l'étape viii), en particulier une étape de thermisation (chauffée 90°C, pendant quelques minutes) afin d'améliorer sa stabilité bactériologique. Avantageusement, la composition CPL1 étant acidifiée, les conditions du traitement thermique peuvent être définies en sorte que les protéines ne soient pas altérées.

Le mélange de sels issus du troisième compartiment 230 peut subir une étape vi) de nanofiltration sur l'unité de nanofiltration 250 afin d'augmenter la pureté du sel de chlorure de sodium issu du troisième compartiment 230 par extraction des sels divalents, tel que le chlorure de calcium CaCl₂. Cette étape peut être suivie de manière optionnelle d'un passage sur une résine chélatante pour atteindre les spécifications de 3-5 ppm en entrée de l'étape v).

La composition CPL1, notamment thermisée, subit une seconde étape d'électrodialyse iii) sur l'électrodialyseur 205.

Le premier compartiment 239 est alimenté par CPL1 thermisée et acidifiée. Le second compartiment 243 reçoit de l'eau. Les anions (chlorures, phosphates) traversent la membrane anionique 241 et sont maintenus dans le second compartiment 243. Les cations (sodium, magnésium) traversent la membrane cationique 237, et restent dans le compartiment saumure (243). La composition CPL2 récupérée à l'étape iv) est ainsi déminéralisée et désacidifiée.

Dans le deuxième compartiment 243, le mélange des sels de chlorure de sodium et/ou de chlorure de potassium (NaCl ,KCl) et des sels de phosphates, issus de CPL1, peuvent subir une étape vii) de nanofiltration permettant d'augmenter la pureté du sel de chlorure de sodium par rétention des ions phosphates.

Le procédé selon l'invention, et en particulier ce second exemple de procédé, peut comprendre avantageusement également une étape v) de traitement du sel de chlorure de sodium ou de potassium sur une unité d'électrodialyse à membranes bipolaires à trois compartiments, en particulier l'électrodialyseur 70 représenté à la figure 2 et décrit ci-avant, permettant de régénérer l'acide, principalement HCl, et la base, principalement de l'hydroxyde de sodium ou de potassium, à partir :
- des flux de sels, notamment NaCl et/ou KCl, issus de la ou des étape(s) de pré-déminéralisation effectuée(s) en amont sur la composition CPL de l'étape i) ;
- et/ou du NaCl et/ou KCl de grade alimentaire ;
- et/ou des flux de NaCl et/ou KCl issus de l'étape (vi) et/ou de l'étape (vii).

La dite étape de pré-déminéralisation consiste de préférence en une étape de nanofiltration.

Dans un mode de réalisation préféré, le sel basique recyclé à l'étape (v) est ajouté à CPL1 dans le compartiment 239, en particulier lors de l'extraction des anions et des cations, c'est-à-dire sous l'effet d'un champ électrique.

Dans un autre mode de réalisation, l'électrodialyseur 205 est arrêté puis un sel basique est ajouté à CPL1 dans le compartiment 239, puis l'électrodialyseur 205 est redémarré pour poursuivre la déminéralisation.

Dans un mode de réalisation, éventuellement combiné avec l'un ou l'autre des deux modes précédents, on ajoute une solution basique après l'étape (iii).

A l'exception du sel utilisé lors du démarrage de l'étape v), les sels acides et basiques utilisés pour la mise en œuvre des étapes d'électrodialyse ii) et iii) sont issus de la composition protéique laitière CPL1, ce qui évite l'introduction de composés minéraux exogènes.

Le second exemple de procédé diffère du premier exemple par l'utilisation de membranes permsélectives à l'étape (ii).

L'étape ii) de substitution cationique peut être effectuée indifféremment sur l'électrodialyseur 5 (fig.1) ou 200 (fig.3).

Pour la réalisation des essais décrits ci-après, une composition protéique laitière, CPL, a été réalisée en préparant une dispersion d'une poudre de lactosérum doux (brut), à 16% de masse sèche dans de l'eau déminéralisée. La dispersion est agitée mécaniquement jusqu'à l'obtention d'un mélange homogène. CPL présente ainsi les paramètres suivants : taux massique en matière sèche : 15,9% (masse poudre/masse totale); pH= 5.95; conductivité initiale : 10,95 mS/cm; taux massique en cendres : 8,1%; taux massique en lactose : 73,5%; taux massique en cations (notamment Na, NH₄, K, Ca, Mg) : 3,79% ; taux massique en anions (notamment Cl , NO₃, PO₄, SO₄): 3,64% ; les différents taux massiques (à l'exception de celui en matière sèche) sont calculés en rapportant la masse totale d'un ou plusieurs composé(s) sur la masse totale de la matière sèche.

### 1- Substitution cationique sur l'électrodialyseur 200 (fig.3)

L'électrodialyseur 200 comprend par exemple de 5 à 15 cellules 215. Le premier compartiment 220 est alimenté par une solution de HCl ayant une conductivité supérieure ou égale à 100 mS/cm, en particulier supérieur ou égal à 150 mS/cm. Le deuxième compartiment 226 est alimenté par CPL exemplifié ci-dessus. Le troisième compartiment est initialement alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères est appliqué à l'électrodialyseur 200, et la tension est de préférence laissée libre. Au cours de l'électrodialyse ii), la conductivité de CPL diminue témoignant de sa déminéralisation, puis elle augmente car les cations qu'elle comprend sont substitués par des ions H+. Le pH de CPL1 obtenu est de l'ordre de 1, et la conductivité de CPL1 est d'environ 12 mS/cm. La conductivité de la solution acide, ie HCl, en sortie du premier compartiment 220 est abaissée d'environ 74%, et la conductivité de la saumure, ie NaCl, obtenue en sortie du troisième compartiment 230, est augmentée d'environ 234%. L'abattement en cations est environ de 84%.

### 2- Substitution cationique sur l'électrodialyseur 5 (fig.1)

L'électrodialyseur 5 comprend par exemple de 5 à 15 cellules 15. Le premier compartiment 20 est alimenté par une solution de HCl ayant une conductivité supérieure ou égale à 100 mS/cm, en particulier supérieur ou égal à 150 mS/cm. Le deuxième compartiment 26 est alimenté par CPL exemplifié ci-dessus. Le troisième compartiment est initialement alimenté une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 1 ampère, notamment inférieur ou égal à 2 ampères est appliqué à l'électrodialyseur 5, et la tension est de préférence laissée libre. Au début de l'électrodialyse ii), la conductivité de CPL diminue témoignant de sa déminéralisation, puis elle augmente car les cations qu'elle comprend sont substitués par des ions H⁺. Dans le compartiment acide 20, la conductivité baisse du fait de l'épuisement des ions H⁺ et de la production de NaCl, moins conducteur. Les cations extraits de CPL migrent dans le compartiment saumure 30, qui s'enrichit en cations multivalents plus conducteurs que le NaCl. Le pH de CPL1 obtenu est de l'ordre de 1, et la conductivité de CPL1 est d'environ 12 mS/cm. La conductivité de la solution acide en sortie du premier compartiment 220 est abaissée d'environ 35%, et la conductivité de la saumure obtenue en sortie du troisième compartiment 30, est augmentée d'environ 25%. L'abattement en cations est environ de 82%.

Pour la mise en œuvre de l'étape iii), CPL1 utilisé peut être indifféremment celui issu de l'électrodialyseur 5 ou 200 puisque ces derniers ont des performances identiques en terme de taux d'abattement en cations.

Pour la réalisation des essais décrits ci-après, une composition protéique laitière, CPL", a été réalisée en préparant une dispersion d'une poudre de lactosérum doux (brut), à 17% de masse sèche dans de l'eau déminéralisée. La dispersion est agitée mécaniquement jusqu'à l'obtention d'un mélange homogène. CPL" présente ainsi les paramètres suivants : taux massique en matière sèche : 17% (masse poudre/masse totale); pH= 5 ; conductivité initiale : 12 mS/cm; taux massique en cendres : 8 % ; taux massique en lactose : 74 % ; taux massique en cations (notamment Na, NH₄, K, Ca, Mg) : 5 %; taux massique en anions (notamment Cl , NO₃, PO₄, SO₄) : 3 % ; les différents taux massiques (à l'exception de celui en matière sèche) sont calculés en rapportant la masse totale d'un ou plusieurs composé(s) sur la masse totale de la matière sèche.

### 3. Substitution cationique sur l'électrodialyseur 200 (ESC) (fig.3)

L'électrodialyseur 200 comprend par exemple de 5 à 15 cellules 215. Le premier compartiment 220 est alimenté par une solution de HCl ayant une conductivité supérieure ou égale à 100 mS/cm, en particulier supérieur ou égal à 150 mS/cm. Le deuxième compartiment 226 est alimenté par CPL" exemplifiée ci-dessus. Le troisième compartiment est alimenté par une solution de NaCl ayant une conductivité inférieure ou égale à 50 mS/cm, en particulier inférieure ou égale à 25 mS/cm, dans cet exemple précis, inférieure ou égale à 15 mS/cm. Un courant (I) supérieur ou égal à 2 ampères, notamment inférieur ou égal à 3 ampères est appliqué à l'électrodialyseur 200, et la tension est de préférence laissée libre. Au cours de l'électrodialyse ii), la conductivité de CPL" diminue témoignant de sa déminéralisation, puis elle augmente car les cations qu'elle comprend sont substitués par des ions H⁺. Le pH de CPL1" obtenu est de l'ordre de 2, et la conductivité de CPL1" est d'environ 12 mS/cm. La conductivité de la solution acide, ie HCl, en sortie du premier compartiment 220 est abaissée d'environ 53%, et la conductivité de la saumure, ie NaCl, obtenue en sortie du troisième compartiment 230, est augmentée d'environ 292%. L'abattement en cations (ou taux de substitution) est environ de 77%. Le taux en anions est quant à lui sensiblement similaire entre CPL" et CPL1".

### 4. Electrodialyse conventionnelle à deux compartiment (ED) (Membrane Anionique / Membrane Cationique) (par exemple étape (iii) 10 ou 205 de la fig.1 ou 3)

Cet électrodialyseur comprend par exemple de 5 à 15 cellules.. Le premier compartiment est alimenté par CPL1" décrit ci-dessus et le deuxième compartiment est alimenté initialement par un sel, notamment du chlorure de sodium, ayant une conductivité supérieure ou égale à 5 ms/cm et inférieure ou égale à 15 ms/cm. Lors de l'essai, une tension supérieure ou égale à 10V et inférieure ou égal à 20V, notamment inférieure ou égale à 15V, est appliquée à l'électrodialyseur à deux compartiments, et le courant (I) est laissé libre. Au-cours de l'essai, la conductivité de CPL1" diminue, témoignant de sa déminéralisation. Une partie des ions H⁺ sont extraits dans le compartiment saumure, d'où l'augmentation du pH de CPL1"(ESC + ED) en sortie, en particulier à un pH supérieur ou égal à 2.5, notamment supérieur ou égal à 3. La conductivité finale de CPL1"(ESC + ED) est abaissée , environ de 90% par rapport à CPL, grâce à cette électrodialyse conventionnelle. Le taux d'abattement en cations (Na, NH₄, K, Ca, Mg) dans CPL1" (ESC + ED) est supérieur ou égal à 90% (par rapport à CPL1" obtenue en sortie de l'ED de substitution cationique, fig.3). Le taux d'abattement en anions (CI, NO₃, PO₄, SO₄) dans CPL1" (ESC + ED) est supérieur ou égal à environ 80 % (par rapport à CPL1" obtenue en sortie de l'ED de substitution cationique, fig.3).

Il est possible d'ajouter une solution basique (par exemple une solution de soude à 5% m/m) à la CPL2 récupérée pour ajuster son pH au pH désiré.

Il est également possible d'ajouter ladite solution basique dans les compartiments de l'électrodialyseur de l'étape (ii) recevant CPL1 concomitamment à l'extraction des cations et des anions, et donc sous l'application du champs électrique. Cette voie permet de remonter le pH tout en déminéralisant CPL1. De plus, il a été observé un effet de synergie car l'extraction des ions phosphates, et des ions calcium et magnésium, est améliorée comparativement à une déminéralisation mettant en jeu une ED sans ajout d'une base.

Pour la réalisation des essais décrits ci-après, une composition protéique laitière, CPL(A) a été approvisionnée à 23% de masse sèche. La composition protéique laitière est un lactosérum doux pré-concentré par évaporation. CPL(A) présente ainsi les paramètres suivants : taux massique en matière sèche : 23% (masse sèche/masse totale); pH= 6.04 ; conductivité initiale : 12,2 mS/cm; taux massique en cendres : 7,6 % (% masse cendres/masse sèche totale); taux massique en MAT : 15,7% (% masse MAT/masse sèche totale); 541 mg de Na /100g de matière sèche totale ; 2269 mg de K /100g de matière sèche totale ; 513 mg de Ca /100g de matière sèche totale ; 104 mg de Mg /100g de matière sèche totale ; 1357 mg de CI /100g de matière sèche totale ; 640 mg de Phosphore /100g de matière sèche totale.

### 5. Substitution cationique sur l'électrodialyseur 200 (ESC) (fig.3)

L'électrodialyseur 200 comprend par exemple de 5 à 25 cellules 215. Le premier compartiment 220 est alimenté par une solution de HCl ayant une conductivité supérieure ou égale à 100 mS/cm, en particulier supérieur ou égal à 150 mS/cm. Le deuxième compartiment 226 est alimenté par CPL(A) exemplifiée ci-dessus. Le troisième compartiment est alimenté par de l'eau. Un courant (I) supérieur ou égal à 2 ampères, notamment inférieur ou égal à 10ampères est appliqué à l'électrodialyseur 200, et la tension est de préférence laissée libre. Au cours de l'électrodialyse ii), la conductivité de CPL(A) diminue témoignant de sa déminéralisation, puis elle augmente car les cations qu'elle comprend sont substitués par des ions H⁺. Le pH de CPL1(A) obtenu est de l'ordre de 2, et la conductivité de CPL1(A) est d'environ 8,0 mS/cm. La conductivité de la solution acide, ie HCl, en sortie du premier compartiment 220 est abaissée, et en sortie du troisième compartiment 230, l'eau s'est chargée en ions et comprend en sortie une saumure. On obtient le profil suivant pour les cations de CPL1(A): 166 mg de Na /100g de matière sèche totale ; 378 mg de K /100g de matière sèche ; 314 mg de Ca /100g de matière sèche totale ; 79 mg de Mg /100g de matière sèche totale. Le taux en anions est quant à lui sensiblement similaire entre CPL(A) et CPL1 (A).

### 6. Electrodialyse conventionnelle à deux compartiment (ED) (Membrane Anionique / Membrane Cationique) (par exemple électrodialyseur 10 ou 205 de la figure 1 ou 3)

Cet électrodialyseur comprend par exemple de 5 à 50 cellules. Le premier compartiment est alimenté par CPL1(A) décrit ci-dessus et le deuxième compartiment est alimenté par de l'eau. Lors de l'essai, une tension supérieure ou égale à 10V et inférieure ou égal à 50V, notamment inférieure ou égale à 40V, est appliquée à l'électrodialyseur à deux compartiments, et le courant (I) est laissé libre. Au-cours de l'essai, la conductivité de CPL1(A) diminue, témoignant de sa déminéralisation. Une partie des ions H⁺ sont extraits dans le compartiment saumure, d'où l'augmentation du pH de CPL1(A) en sortie.

Dans un mode de réalisation, l'ajout d'une solution basique à 5% (m/m) est effectué sur CPL2 après l'étape (iii) et non au-cours de l'étape (iii).

Dans ce cas, le pH de CPL2 obtenue en sortie de l'étape (iii) (avant ajout de soude) est de l'ordre de 4.5. CPL2 en sortie de l'étape (iii) a une conductivité de l'ordre de 0,3 mS/cm. On obtient le profil ionique suivant: environ 0 mg de Na /100g de matière sèche totale ; environ 0 mg de K /100g de matière sèche totale ; 35 mg de Ca /100g de matière sèche totale ; 19 mg de Mg /100g de matière sèche totale ; 14 mg de CI /100g de matière sèche totale ; 206 mg de phosphore /100g de matière sèche totale. Le taux d'abattement en cations est de 98%, et le taux d'abattement en anions est de 89%.

Dans un autre mode de réalisation, l'ajout de la solution basique est effectué sur CPL1 au-cours de l'étape (iii) simultanément à l'extraction des anions et des cations, sous l'application d'un champ électrique. Une solution de soude (NaOH) à 5% (m/m) est ajoutée dans les compartiments de l'électrodialyseur à l'étape (iii) comprenant CPL1. De préférence, cet ajout est effectué après un abattement d'environ 75% de la conductivité observée sur l'ED (iii). De préférence, l'ajout de soude est effectué lorsque CPL1 a une conductivité inférieure ou égal à 1 mS/cm, dans cet exemple précis de l'ordre de 0,5 mS/cm, et/ou à un pH supérieur ou égal à 3, notamment supérieur ou égal à 4.

Dans ce cas, le pH de CPL2 obtenue en sortie de l'étape (iii) est de l'ordre de 5.2. CPL2 en sortie de l'étape (iii) a une conductivité de l'ordre de 0,3 mS/cm. On obtient le profil ionique suivant: environ 53 mg de Na /100g de matière sèche totale ; environ 0 mg de K /100g de matière sèche totale ; 24 mg de Ca /100g de matière sèche totale ; 13 mg de Mg /100g de matière sèche totale ; 9 mg de CI /100g de matière sèche totale ; 160 mg de phosphore /100g de matière sèche totale. Le taux de cendres est de 0,50% (% masse cendres/masse sèche totale). Le taux d'abattement en cations est de 97%, et le taux d'abattement en anions est de 92%.

L'ajout d'une solution basique durant l'ED (iii) sous l'application d'un champ électrique permet d'améliorer l'extraction des ions phosphates et des cations divalents par rapport à une ED (iii) sans ajout de la solution basique.

Dans un mode de réalisation comparatif, l'étape (ii) ne comprend pas l'ajout d'une solution basique, et le procédé de déminéralisation comprend une étape de substitution exclusivement anionique sur un électrodialyseur dont les cellules comprennent trois compartiments CPL2(A), tel que décrit dans le présent texte, effectué après l'étape (ii). Dans ce cas, le pH de la composition protéique laitière obtenue est de l'ordre de 5.4, pour une conductivité de l'ordre de 0,2 mS/cm. On obtient le profil ionique suivant: environ 19 mg de Na /100g de matière sèche totale ; environ 2 mg de K /100g de matière sèche totale ; 39 mg de Ca /100g de matière sèche totale ; 37 mg de Mg /100g de matière sèche totale ; 11 mg de Cl /100g de matière sèche totale ; 110 mg de phosphate /100g de matière sèche totale. Le taux de cendres est de 0,40% (% masse cendres/masse sèche totale). Les fractions massiques en cations divalents sont supérieures à celles obtenues ci-dessus comparativement à une étape (iii) durant une période de laquelle on ajoute une solution basique.

L'étape (iii) avec ajout d'une base au-cours de cette dernière sous champ électrique, combinée avec l'étape (ii), permet d'améliorer l'extraction des cations divalents d'environ 30% et l'extraction des phosphates d'environ 20% comparativement à l'étape (iii) sans ajout de soude au-cours de cette dernière et combinée avec l'étape (ii), et l'extraction des cations divalents d'environ 44% comparativement au mode de réalisation comparatif.

L'étape (iii) décrite au point 6, peut être appliquée également à CPL1 obtenue au point 1 ou au point 2 pour l'obtention de CPL2.

## Revendications

1. Procédé de fabrication d'une composition protéique laitière déminéralisée (CPL2), **caractérisé en ce qu'**il comprend les étapes suivantes :
(i)- fourniture d'une composition protéique laitière (CPL) ;
(ii)- électrodialyse de la composition protéique laitière (CPL) sur un électrodialyseur (5,200), comprenant des unités cellulaires (15, 215) comprenant trois compartiments (20,26,30; 220,226,230), et configuré pour substituer au moins un cation par au moins un ion hydrogène H⁺ dans la composition protéique laitière (CPL) pour obtenir une composition protéique laitière au moins partiellement déminéralisée et acidifiée (CPL1) ;
(iii)- électrodialyse de la composition protéique laitière (CPL1) obtenue à l'étape (ii) ;
(iv)- récupération de la composition protéique laitière déminéralisée (CPL2) et **en ce que** ledit procédé comprend l'ajout d'au moins une solution basique à la composition protéique laitière au-cours de l'étape (iii) et/ou après l'étape (iii).

2. Procédé de fabrication selon la revendication 1, **caractérisé en ce que** ladite au moins une solution basique est une solution comprenant au moins un sel basique.

3. Procédé de fabrication selon l'une ou l'autre des revendications **1 et 2, caractérisé en ce que** l'ajout de la solution basique est effectuée durant au moins une partie de l'étape (iii) d'électrodialyse concomitamment à l'extraction des ions.

4. Procédé de fabrication selon l'une quelconque des revendications **1 à 3, caractérisé en ce que** l'ajout de la solution basique à la composition protéique laitière est effectuée lorsque la composition protéique laitière a une conductivité inférieure ou égale à 1 mS/cm, et de préférence a un pH supérieur ou égal à 3.

5. Procédé de fabrication selon l'une quelconque des revendications **1 à 4, caractérisé en ce qu'**après l'ajout de la solution basique, la composition protéique laitière a un pH supérieur ou égal à 4.5, de préférence supérieur ou égal à 5.0.

6. Procédé de fabrication selon l'une quelconque des revendications **1 à 5, caractérisé en ce que** l'étape d'électrodialyse (iii) comprend l'extraction d'anions et de cations.

7. Procédé de fabrication selon l'une quelconque des revendications **1 à 6, caractérisé en ce que** l'étape (ii) est une étape de substitution exclusivement de cations.

8. Procédé de fabrication selon l'une quelconque des revendications **1 à 7, caractérisé en ce que** la composition protéique laitière récupérée à l'étape (iv) (CPL2) comprend des ions phosphates (H₂PO₄⁻, HPO₄²⁻, PO₄³⁻) dont la masse en phosphore est supérieure ou égale à 110 mg, de préférence supérieure ou égale à 150 mg, pour 100g de masse sèche totale de ladite composition protéique laitière récupérée (CPL2).

9. Procédé de fabrication selon l'une quelconque des revendications **1 à 8, caractérisé en ce que** la composition protéique laitière récupérée à l'étape (iv) (CPL2) comprend des ions sodium ou potassium, dont la masse est supérieure ou égale à 20 mg, de préférence supérieure ou égale à 30 mg, pour 100g de masse sèche totale de ladite composition protéique laitière récupérée (CPL2).

10. Procédé de fabrication selon l'une quelconque des revendications **1 à 9, caractérisé en ce que** les compartiments de l'électrodialyseur de l'étape (ii) recevant la composition protéique laitière (CPL) sont délimités chacun entre deux membranes cationiques (24,28 ; 224,228).

11. Procédé de fabrication selon l'une quelconque des revendications **1 à 10, caractérisé en ce qu'**il comprend une étape de traitement (v) d'au moins une partie du ou des sel(s) choisi(s) parmi les sels suivants :
- le ou les sel(s) issu(s) directement de l'étape d'électrodialyse ii),
- le ou les sel(s) issu(s) indirectement de l'étape d'électrodialyse ii),
- le ou les sel(s) issu(s) directement de l'étape d'électrodialyse iii),
- le ou les sel(s) issu(s) indirectement de l'étape d'électrodialyse iii),
- le ou les sel(s) issu(s) d'une étape de déminéralisation préliminaire effectuée sur la composition protéique laitière en amont de l'étape i),
- un mélange de ces derniers,
ladite étape de traitement (v) étant configurée pour produire un ou des sel(s) acide(s) d'une part, et/ou une ou des sel(s) basique(s) d'autre part.

12. Procédé de fabrication selon la revendication 11, **caractérisé en ce que** l'étape de traitement (v) consiste en une étape d'électrodialyse effectuée sur un électrodialyseur à membrane(s) bipolaire(s) (70).

13. Procédé de fabrication selon la revendication 12, **caractérisé en ce que** l'électrodialyseur à membrane(s) bipolaire(s) (70), à l'étape (v), comprend des unités cellulaires (105) comprenant trois compartiments A, B et C (110,116,120), les compartiments A et B sont alimentés en eau et le compartiment C est alimenté par le ou lesdits sel(s), en particulier le compartiment C disposé entre les compartiments A et B,.

14. Procédé de fabrication selon la revendication 13, **caractérisé en ce que** au moins une partie du ou des sel(s), notamment d'acide chlorhydrique et/ou d'acide sulfurique, obtenu(s) lors de l'étape de traitement (v), est/sont alimenté(s) à l'un des trois compartiments (20,26,30 ; 220,226,230) de l'électrodialyseur (5,200) à l'étape ii).

15. Procédé de fabrication selon l'une quelconque des revendications **11 à** 14, **caractérisé en ce que** la solution basique comprend au moins en partie un ou des sel(s) basique(s), notamment l'hydroxyde de sodium et/ou de l'hydroxyde de potassium, obtenu(s) lors de l'étape de traitement (v).

16. Procédé de fabrication selon l'une quelconque des revendications **1 à 15,** caractérisé en ce la solution basique est issue au moins en partie du recyclage d'un effluent issu de l'étape ii) et/ou de l'étape iii).

17. Procédé de fabrication selon l'une quelconque des revendications **1 à 16, caractérisé en ce que** la composition protéique laitière est choisi dans la liste comprenant : un lactosérum, tel qu'un lactosérum doux ou un lactosérum acide ou leur mélange ; un perméat d'ultrafiltration du lait ; un perméat de microfiltration du lait ; un rétentat ou un perméat d'ultrafiltration de lactosérum; un rétentat ou un perméat d'ultrafiltration d'un perméat de microfiltration du lait ; ou un mélange de ces derniers, de préférence un lactosérum.

18. Installation pour la mise en œuvre du procédé selon l'une quelconque des revendications **1 à** 17, **caractérisée en ce qu'**elle comprend :
a) un premier électrodialyseur (5,200) comprenant une première entrée destinée à recevoir une composition protéique laitière (CPL), ledit électrodialyseur comprenant des unités cellulaires (15, 215) comprenant trois compartiments (20,26,30; 220,226,230), et configuré pour substituer au moins un cation par au moins un ion hydrogène H⁺ dans la composition protéique laitière (CPL), et une première sortie pour une composition protéique laitière au moins partiellement déminéralisée et acidifiée (CPL1);
b) un second électrodialyseur (10,205) comprenant une première entrée destinée à recevoir la composition protéique laitière (CPL1) obtenue à l'étape (ii), et une première sortie pour la composition protéique laitière (CPL2), et **en ce que** ladite installation comprend :
c) un dispositif comprenant une solution basique et configuré pour être en communication fluidique durant un temps donné avec les compartiments du second électrodialyseur destinés à recevoir la composition protéique laitière (CPL1), de préférence sous l'application d'un champ électrique.

## Patentansprüche

1. Herstellungsverfahren einer entmineralisierten Milchproteinzusammensetzung (CPL2), **dadurch gekennzeichnet, dass** es die folgenden Schritte umfasst:
(i) Bereitstellen einer Milchproteinzusammensetzung (CPL);
(ii) Elektrodialyse der Milchproteinzusammensetzung (CPL) auf einem Elektrodialysator (5, 200), umfassend zelluläre Einheiten (15, 215), umfassend drei Kammern (20, 26, 30; 220, 226, 230), und der konfiguriert ist, um mindestens ein Kation durch mindestens ein Wasserstoffion H⁺ in der Milchproteinzusammensetzung (CPL) zu ersetzen, um eine mindestens teilweise entmineralisierte und angesäuerte Milchproteinzusammensetzung (CPL1) zu erlangen;
(iii) Elektrodialyse der in Schritt (ii) erlangten Milchproteinzusammensetzung (CPL1);
(iv) Gewinnen der entmineralisierten Milchproteinzusammensetzung (CPL2), und dass das Verfahren ein Hinzufügen von mindestens einer basischen Lösung zu der Milchproteinzusammensetzung während des Schritts (iii) und/oder nach dem Schritt (iii) umfasst.

2. Herstellungsverfahren nach Anspruch 1, **dadurch gekennzeichnet, dass** die mindestens eine basische Lösung eine Lösung ist, die mindestens ein basisches Salz umfasst.

3. Herstellungsverfahren nach einem der Ansprüche 1 oder 2, **dadurch gekennzeichnet, dass** das Hinzufügen der basischen Lösung während mindestens eines Teils des Elektrodialyseschritts (iii) gleichzeitig mit der Extraktion der Ionen durchgeführt wird.

4. Herstellungsverfahren nach einem der Ansprüche 1 bis 3, **dadurch gekennzeichnet, dass** das Hinzufügen der basischen Lösung zu der Milchproteinzusammensetzung erfolgt, wenn die Milchproteinzusammensetzung eine Leitfähigkeit von weniger als oder gleich wie 1 ms/cm aufweist und vorzugsweise einen pH von mehr als oder gleich wie 3 aufweist.

5. Herstellungsverfahren nach einem der Ansprüche 1 bis 4, **dadurch gekennzeichnet, dass** die Milchproteinzusammensetzung nach dem Hinzufügen der basischen Lösung einen pH von mehr als oder gleich wie 4,5, vorzugsweise größer als oder gleich wie 5,0, aufweist.

6. Herstellungsverfahren nach einem der Ansprüche 1 bis 5, **dadurch gekennzeichnet, dass** der Elektrodialyseschritt (iii) die Extraktion von Anionen und Kationen umfasst.

7. Herstellungsverfahren nach einem der Ansprüche 1 bis 6, **dadurch gekennzeichnet, dass** Schritt (ii) ein Schritt ist, bei dem ausschließlich Kationen substituiert werden.

8. Herstellungsverfahren nach einem der Ansprüche 1 bis 7, **dadurch gekennzeichnet, dass** die in Schritt (iv) gewonnene Milchproteinzusammensetzung (CPL2) Phosphationen (H₂PO₄⁻, HPO₄²⁻, PO₄³⁻) umfasst, deren Phosphormasse größer als oder gleich wie 110 mg, vorzugsweise größer als oder gleich wie 150 mg, pro 100 g Gesamttrockenmasse der gewonnenen Milchproteinzusammensetzung (CPL2) ist.

9. Herstellungsverfahren nach einem der Ansprüche 1 bis 8, **dadurch gekennzeichnet, dass** die in Schritt (iv) gewonnene Milchproteinzusammensetzung (CPL2) Natrium- oder Kaliumionen umfasst, deren Masse größer als oder gleich wie 20 mg, vorzugsweise größer als oder gleich wie 30 mg, pro 100 g der Gesamttrockenmasse der gewonnenen Milchproteinzusammensetzung (CPL2) ist.

10. Herstellungsverfahren nach einem der Ansprüche 1 bis 9, **dadurch gekennzeichnet, dass** die Kammern des Elektrodialysators in Schritt (ii), die die Milchproteinzusammensetzung (CPL) erhalten, jeweils zwischen zwei kationischen Membranen (24, 28; 224, 228) abgegrenzt sind.

11. Herstellungsverfahren nach einem der Ansprüche 1 bis 10, **dadurch gekennzeichnet, dass** es einen Behandlungsschritt (v) von mindestens einem Teil des Salzes oder der Salze umfasst, das/die aus den folgenden Salzen ausgewählt ist/sind:
- das Salz oder die Salze, die direkt aus einem Elektrodialyseschritt ii) stammen,
- das Salz oder die Salze, die indirekt aus einem Elektrodialyseschritt ii) stammen,
- das Salz oder die Salze, die direkt aus einem Elektrodialyseschritt iii) stammen,
- das Salz oder die Salze, die indirekt aus einem Elektrodialyseschritt iii) stammen,
- das Salz oder die Salze, die aus einem vorläufigen Entmineralisierungsschritt stammen, der an der Milchproteinzusammensetzung vor dem Schritt i) durchgeführt wird,
- ein Gemisch dieser Letzteren,
wobei der Behandlungsschritt (v) konfiguriert ist, um einerseits ein oder mehrere saure(s) Salz(e) und/oder andererseits ein oder mehrere basische(s) Salz(e) zu erzeugen.

12. Herstellungsverfahren nach Anspruch 11, **dadurch gekennzeichnet, dass** der Behandlungsschritt (v) aus einem Elektrodialyseschritt besteht, der auf einem Elektrodialysator mit bipolarer(n) Membran(en) (70) durchgeführt wird.

13. Herstellungsverfahren nach Anspruch 12, **dadurch gekennzeichnet, dass** der Elektrodialysator mit bipolarer/n Membran/en (70) in Schritt (v) zelluläre Einheiten (105) umfasst, die drei Kammern A, B und C (110, 116, 120) umfassen, wobei die Abteile A und B mit Wasser versorgt werden und die Kammer C mit dem Salz/den Salzen versorgt wird, insbesondere die zwischen den Kammern A und B angeordnete Kammer C.

14. Herstellungsverfahren nach Anspruch 13, **dadurch gekennzeichnet, dass** zumindest ein Teil des Salzes oder der Salze, insbesondere Salzsäure und/oder Schwefelsäure, das/die in Behandlungsschritt (v) erlangt wird/werden, in Schritt ii) einer der drei Kammern (20, 26, 30; 220, 226, 230) des Elektrodialysators (5, 200) zugeführt wird/werden.

15. Herstellungsverfahren nach einem der Ansprüche 11 bis 14, **dadurch gekennzeichnet, dass** die basische Lösung zumindest teilweise ein oder mehrere basische Salze, insbesondere Natriumhydroxid und/oder Kaliumhydroxid, umfasst, die in der Behandlungsstufe (v) erlangt werden.

16. Herstellungsverfahren nach einem der Ansprüche 1 bis 15, **dadurch gekennzeichnet, dass** die basische Lösung zumindest teilweise aus dem Recycling eines Abwassers aus Schritt ii) und/oder Schritt iii) stammt.

17. Herstellungsverfahren nach einem der Ansprüche 1 bis 16, **dadurch gekennzeichnet, dass** die Milchproteinzusammensetzung ausgewählt ist aus der Liste, umfassend: Molke, wie beispielsweise Süßmolke oder Sauermolke oder deren Gemisch; Milch-Ultrafiltrationspermeat; Milch-Mikrofiltrationspermeat; Molke-Ultrafiltrationsretentat oder -permeat; Ultrafiltrationsretentat oder -permeat von Milch-Mikrofiltrationspermeat; oder ein Gemisch davon, vorzugsweise Molke.

18. Anlage zum Durchführen des Verfahrens nach einem der Ansprüche 1 bis 17, **dadurch gekennzeichnet, dass** sie Folgendes umfasst:
a) einen ersten Elektrodialysator (5, 200), umfassend einen ersten Einlass zum Aufnehmen einer Milchproteinzusammensetzung (CPL), wobei der Elektrodialysator zelluläre Einheiten (15, 215) umfasst, die drei Kammern (20, 26, 30; 220, 226, 230) umfassen und konfiguriert sind, um mindestens ein Kation durch mindestens ein Wasserstoffion H⁺ in der Milchproteinzusammensetzung (CPL) zu ersetzen, und einen ersten Auslass für eine mindestens teilweise entmineralisierte und angesäuerte Milchproteinzusammensetzung (CPL1);
b) einen zweiten Elektrodialysator (10, 205), umfassend einen ersten Einlass zum Aufnehmen der in Schritt (ii) erlangten Milchproteinzusammensetzung (CPL1) und einen ersten Auslass für die Milchproteinzusammensetzung (CPL2), und dass die Anlage Folgendes umfasst:
c) eine Vorrichtung, die eine basische Lösung umfasst und konfiguriert ist, um während einer bestimmten Zeit in Fluidverbindung mit den Kammern des zweiten Elektrodialysators zu sein, die dazu bestimmt sind, die Milchproteinzusammensetzung (CPL1) aufzunehmen, vorzugsweise unter der Anwendung eines elektrischen Felds.

## Claims

1. A process for manufacturing a demineralised milk protein composition (MPC2), **characterised in that** it comprises the following steps:
(i) - providing a milk protein composition (MPC);
(ii) - electrodialysis of the milk protein composition (MPC) on an electrodialyser (5, 200), comprising unit cells (15, 215) comprising three compartments (20, 26, 30; 220, 226, 230), and configured to substitute at least one cation by at least one hydrogen ion H⁺ in the milk protein composition (MPC) to obtain an at least partially demineralised and acidified milk protein composition (MPC1);
(iii)- electrodialysis of the milk protein composition (MPC1) obtained in step (ii);
(iv) - recovering the demineralised milk protein composition (MPC2) and **in that** said process comprises the addition of at least one basic solution to the milk protein composition during step (iii) and/or after step (iii).

2. Manufacturing process according to claim 1, **characterised in that** said at least one basic solution is a solution comprising at least one basic salt.

3. The manufacturing process according to either one of claims 1 and 2, **characterised in that** the addition of the basic solution is carried out during at least one part of the electrodialysis step (iii) concomitantly with the extraction of ions.

4. The manufacturing process according to any one of the claims 1 to 3, **characterised in that** the addition of the basic solution to the milk protein composition is carried out when the milk protein composition has a conductivity less than or equal to 1 mS/cm, and preferably has a pH greater than or equal to 3.

5. The manufacturing process according to any one of the claims 1 to 4, **characterised in that** after the addition of the basic solution, the milk protein composition has a pH greater than or equal to 4.5, preferably greater than or equal to 5.0.

6. The manufacturing process according to any one of claims 1 to 5, **characterised in that** the electrodialysis step (iii) comprises the extraction of anions and cations.

7. The manufacturing process according to any one of claims 1 to 6, **characterised in that** step (ii) is a step of substitution exclusively of cations.

8. The manufacturing process according to any one of claims 1 to 7, **characterised in that** the milk protein composition recovered in step (iv) (MPC2) comprises phosphate ions (H₂PO₄⁻, HPO₄²⁻, PO₄³⁻), for which the mass of phosphorus is greater than or equal to 110 mg, preferably greater than or equal to 150 mg, for 100 g of total dry mass of said recovered milk protein composition (MPC2).

9. The manufacturing process according to any one of claims 1 to 8, **characterised in that** the milk protein composition recovered in step (iv) (MPC2) comprises sodium or potassium ions, the mass of which is greater than or equal to 20 mg, preferably greater than or equal to 30 mg, for 100 g of total dry mass of said recovered milk protein composition (MPC2).

10. The manufacturing process according to any one of claims 1 to 9, **characterised in that** the compartments of the electrodialyser of step (ii) receiving the milk protein composition (MPC) are each delimited between two cationic membranes (24, 28; 224, 228).

11. The manufacturing process according to any one of claims 1 to 10, **characterised in that** it comprises a treatment step (v) of at least part of the salt(s) selected from the following salts:
- the salt(s) derived directly from electrodialysis step ii),
- the salt(s) derived indirectly from electrodialysis step ii),
- the salt(s) derived directly from electrodialysis step iii),
- the salt(s) derived indirectly from electrodialysis step iii),
- the salt(s) from a preliminary demineralisation step carried out on the milk protein composition before step i),
- a mixture of the latter,
said treatment step (v) being configured to produce one or more acid salts on the one hand, and/or one or more basic salts on the other hand.

12. The manufacturing process according to claim 11, **characterised in that** treatment step (v) consists of an electrodialysis step carried out on a bipolar membrane electrodialyser (70).

13. The manufacturing process according to claim 12, **characterised in that** the bipolar membrane electrodialyser (70), in step (v), comprises unit cells (105) comprising three compartments A, B and C (110,116,120), compartments A and B are supplied with water and compartment C is supplied with the one or more salts, in particular compartment C arranged between compartments A and B.

14. The manufacturing process according to claim 13, **characterised in that** at least some of the one or more salts, in particular of hydrochloric acid and/or of sulfuric acid, obtained during treatment step (v), is/are supplied to one of the three compartments (20, 26, 30; 220, 226, 230) of the electrodialyser (5, 200) in step ii).

15. The manufacturing process according to any one of claims 11 to 14, **characterised in that** the basic solution comprises, at least in part, one or more basic salts, in particular sodium hydroxide and/or potassium hydroxide, obtained during treatment step (v).

16. The manufacturing process according to any one of claims 1 to 15, **characterised in that** the basic solution is derived, at least in part, from the recycling of an effluent derived from step ii) and/or step iii).

17. The manufacturing process according to any one of claims 1 to 16, **characterised in that** the milk protein composition is selected from the list comprising: whey, such as sweet whey or acid whey or a mixture thereof; a milk ultrafiltration permeate; a milk microfiltration permeate; a whey ultrafiltration retentate or permeate; a milk microfiltration permeate ultrafiltration retentate or permeate; or a mixture thereof, preferably whey.

18. A facility for implementing the process according to any one of claims 1 to 17, **characterised in that** it comprises:
a) a first electrodialyser (5, 200) comprising a first inlet intended to receive a milk protein composition (MPC), said electrodialyser comprising unit cells (15, 215) comprising three compartments (20, 26, 30; 220, 226, 230), and configured to substitute at least one cation by at least one hydrogen ion H⁺ in the milk protein composition (MPC), and a first outlet for an at least partially demineralised and acidified milk protein composition (MPC1);
b) a second electrodialyser (10,205) comprising a first inlet intended to receive the milk protein composition (MPC1) obtained in step (ii), and a first outlet for the milk protein composition (MPC2), and **in that** said facility comprises:
c) a device comprising a basic solution and configured to be in fluid communication during a given period with the compartments of the second electrodialyser that are intended to receive the milk protein composition (MPC1), preferably under the application of an electric field.
